# FASCICULE DE BREVET EUROPEEN

(11) **EP 4 526 008 B1**
(45) Date de publication et mention de la délivrance du brevet: **05.11.2025**
(21) Numéro de dépôt: 23729804.7
(22) Date de dépôt: 12.05.2023
(51) Int. Cl.: B01D 29/15, B01D 29/50, B01D 29/58, B01D 36/00

(54) **CARTOUCHE FILTRANTE À EFFET DÉSHYDRATANT ET DISPOSITIF DE FILTRATION POUR LUBRIFIANT INCLUANT LA CARTOUCHE**
ENTWÄSSERUNGSFILTERPATRONE UND FILTRIERVORRICHTUNG MIT DER PATRONE ZUM FILTRIEREN VON SCHMIERMITTEL
DEHYDRATING FILTER CARTRIDGE AND FILTRATION DEVICE INCLUDING THE CARTRIDGE FOR FILTERING LUBRICANT

(30) Priorité: 17.05.2022 FR 2204678
(43) Date de publication de la demande: 26.03.2025
(73) Titulaire: Purflux Filtration, 78280 Guyancourt (FR)
(72) Inventeur: BONNE, Samuel, 14500 VIRE-NORMANDIE (FR); KUFEL, Nicolas, 14760 BRETTEVILLE-SUR-ODON (FR)
(74) Mandataire: Plasseraud IP
(86) Numéro de dépôt international: PCT/FR2023/050681
(87) Numéro de publication internationale: WO 2023/222967

(56) Documents cités:
- EP-A1- 0 481 239
- US-A- 6 027 639
- US-A1- 2021 252 438
- US-B2- 10 183 658
- US-B2- 8 225 940

## Description

### Domaine technique

La présente divulgation concerne la purification de liquides et en particulier de l'huile utilisée dans les moteurs (par exemple à combustion interne) des véhicules motorisés.

Il est plus particulièrement question d'une cartouche filtrante pour la filtration d'un liquide de moteur, adaptée pour se loger de façon amovible dans un boîtier de filtre, la cartouche comprenant :
- un élément filtrant incluant un média filtrant de forme annulaire permettant la purification du liquide en s'étendant autour d'un axe central ; et
- un moyen de dessiccation/assèchement traversé par un flux purifié sortant de l'élément filtrant.

La divulgation se rapporte aussi à un dispositif de filtration, incluant la cartouche et un boîtier de délimitation d'une chambre de filtration où est logée la cartouche. Il est en outre proposé une utilisation de la cartouche dans un boîtier pour permettre une filtration de liquide de lubrification avec une retenue/absorption d'eau.

### Arrière-plan technologique

Dans des véhicules motorisés, par exemple des automobiles, des systèmes ou circuit de fluide de lubrification sont utilisés. Il a été constaté la présence d'eau en quantité suffisante dans le fluide de lubrification pour avoir des effets indésirables. L'eau peut atteindre un réservoir ou une zone d'écoulement du fluide, par exemple par une interface d'échange air-fluide, et s'accumuler dans le fluide. L'eau peut être présente dans le fluide sous forme d'eau libre ou dissoute. Parmi les effets indésirables, il faut citer par exemple la corrosion des composants de mise en circulation de fluide du système, une augmentation ou une diminution de la conductivité électrique du fluide et/ou une réduction de la durée de vie du fluide, c'est-à-dire un raccourcissement des intervalles d'entretien. En outre à basse température, des cristaux de glace peuvent se former et bloquer le système.

Un effet de déshydratation peut limiter de tels inconvénients. Le document US 2021252425 divulgue un dispositif de déshydratation pour un réservoir ou boîtier dans lequel s'accumule de l'huile. Le dispositif comprend une cartouche cylindrique allongée, dont une paroi consiste en un élément à fin maillage, délimitant un espace interne où de l'huile peut circuler après avoir été filtrée par l'élément à fin maillage, afin d'atteindre une sortie du réservoir. Un matériau de dessiccation, apte à retenir de l'eau est placé dans cet espace interne et permet de capter à la fois l'eau libre provenant d'une zone de fond du réservoir et l'eau dissoute dans d'huile.

L'intégration de ce type de cartouche, dans un réservoir, peut poser des problèmes d'accessibilité, rendant une opération de rechange délicate. Par ailleurs, la perte de charge liée à ce type de cartouche peut être importante, ce qui en limite l'application. Le document US2021/252438 décrit une cartouche filtrante selon le préambule de la revendication 1.

Il existe donc un besoin pour une solution alternative d'assemblage d'une cartouche à effet de déshydratation, par exemple amovible, dans un environnement encombré (sous le capot d'un véhicule motorisé par exemple), de façon compacte, accessible et limitant le risque de chute de pression.

### Résumé

A cet effet, il est proposé une cartouche filtrante pour la filtration d'un liquide de moteur, la cartouche comprenant :
- un premier élément filtrant incluant un média filtrant de forme annulaire permettant une purification dudit liquide en s'étendant autour d'un axe central, un espace interne creux délimité par le média filtrant débouchant axialement via au moins un orifice axial prévu dans le premier élément filtrant ; et
- un filtre de dessiccation (filtre sécheur) ayant une paroi perméable entourant un volume interne dans lequel est reçu du matériau de dessiccation, le filtre présentant une extrémité libre formant tout ou partie d'une région de sortie de liquide purifié mis en contact avec le matériau de dessiccation ;
avec la particularité que le filtre de dessiccation est une unité distincte du premier élément filtrant (fonctionnellement distincte et conçue séparément), typiquement sous la forme d'une unité préassemblée, pour constituer un deuxième élément filtrant pourvu d'un connecteur engagé sur une ossature du premier élément filtrant à l'opposé de l'extrémité libre, en étant inséré axialement dans ledit espace via l'orifice, de sorte que le connecteur s'étend dans l'espace interne creux où circule du liquide purifié sortant d'une face interne du média, l'orifice axial incluant au moins une section de passage, de préférence périphérique par rapport à la paroi perméable, permettant à du liquide présent dans l'espace interne creux de circuler hors de la cartouche via ledit orifice axial sans passer par la paroi perméable, de sorte à former une autre région de sortie pour faire sortir du liquide (typiquement purifié en ayant traversé le média) hors de la cartouche.

Avec cet agencement, le filtre de dessiccation est un moyen de dessiccation/séchage du liquide qui peut être intégré de façon compacte (dans l'espace intérieur creux au moins pour partie) dans un dispositif de filtration de conception flexible, par exemple en étant associé à un élément filtrant robuste et amovible qui supporte et protège ce filtre. La cartouche est compatible avec des changements de pression au niveau de filtre de dessiccation qui est conçu comme un deuxième élément filtrant en série derrière le premier élément filtrant, avec une aptitude à garantir un niveau d'écoulement minimal, en minimisant ainsi des phénomènes indésirables de chute de pression. La paroi perméable protège le ou les matériau(x) de dessiccation prévu(s) dans le volume interne.

Pour la mise en place du filtre de dessiccation, ce filtre peut être attaché dans l'espace interne creux du premier élément filtrant qui a déjà été entièrement assemblé, à l'éventuelle exception d'une vanne anti-retour s'insérant (à l'opposé de l'orifice axial) dans l'espace interne creux après la fixation réalisée par le connecteur.
Optionnellement, l'ossature du premier élément filtrant et une paroi latérale externe du deuxième élément filtrant, incluant la paroi perméable, sont en regard l'une de l'autre dans l'espace interne creux avec un espacement radial, par exemple supérieur ou égale à 1 mm, et/ou en chevauchement l'une sur l'autre de façon à délimiter des canaux intercalaires longitudinaux pour la circulation du liquide jusqu'à l'orifice axial.

Eventuellement, l'ossature dispose de reliefs radialement saillants vers l'intérieur, distribués dans plusieurs secteurs angulaires, afin de maintenir tout ou partie dudit espacement radial, par exemple même en cas de gonflement radial vers l'extérieur d'une partie latérale en vis-à-vis de la paroi perméable. Plus généralement, on comprend que l'ossature avec tube interne du premier élément filtrant, peut définir une partie d'espacement ajourée et adaptée pour :
- retenir axialement une partie d'ancrage du connecteur dans l'espace interne creux, et/ou
- délimiter, dans l'espace interne creux, une voie de circulation contournant le filtre de dessication jusqu'à l'autre région de sortie.

Grâce à cette disposition, un effet de dérivation est permis pour une fraction de liquide passant par exemple par moins de 10% de la section de passage cumulée en additionnant la section de passage dans la région de sortie formée par le deuxième élément filtrant et la région de sortie formée entre le premier élément et le deuxième élément.

La paroi perméable peut présenter une portion latérale tubulaire agencée parallèlement au média pour permettre de réaliser successivement une première filtration centripète par le média et une deuxième filtration centripète par la portion tubulaire de la paroi perméable pour une première fraction de liquide, avant une mise en contact de cette première fraction de liquide avec le matériau de dessication.

Avec ou sans une telle disposition/géométrie longitudinale de la paroi perméable à travers laquelle passe une première fraction de liquide pour sortir de la cartouche (via le deuxième élément filtrant), la cartouche peut comprendre des moyens de dérivation pour faire circuler une deuxième fraction de liquide dans l'espace interne creux en direction dudit orifice axial sans passer par l'un au moins parmi le média filtrant et la paroi perméable.

Grâce à ce type d'agencement, le filtre de dessication est traversé par une première fraction du flux de lubrifiant purifié, qui peut représenter une fraction majoritaire du débit sortant dans des conditions de fonctionnement sans perte de charge significative due au deuxième élément filtrant. L'ossature interne formée dans le premier élément filtrant, en relation radialement espacée au moins par endroit avec le deuxième élément filtrant, permet de canaliser un écoulement d'une deuxième fraction du flux de lubrifiant, avec pour effet de réduire l'effet indésirable de chute de pression.

Optionnellement, le filtre de dessiccation peut inclure une structure porteuse tubulaire, formant un tube ajouré latéralement et ouvert à ses deux extrémités axiales, la paroi perméable étant surmoulé ou fixé par l'intérieur de la structure porteuse. Deux éléments d'obturation axiale, attachées par exemple à la structure porteuse, peuvent compléter la paroi perméable qui est tubulaire en délimitant ainsi un volume interne qui ne laisse pas s'échapper du matériau de dessiccation.
Ce filtre peut être plus long que large et adapté pour constituer un deuxième élément filtrant compact n'ajoutant pas d'encombrement par rapport à un premier élément filtrant pris seul, à l'exception d'une partie centrale apte à pénétrer dans un conduit de sortie de la base du boîtier recevant la cartouche. Une largeur ou diamètre maximal du filtre de dessication est par exemple défini au niveau d'un anneau rigide, appartenant à la structure porteuse (porteuse de la membrane/toile formant la paroi perméable) qui est supportée par le premier élément filtrant. La partie d'insertion du filtre s'étend longitudinalement depuis cet anneau, dans l'espace interne creux du premier élément filtrant.

Le matériau de dessiccation peut être de type granulaire et éventuellement disposé en vrac dans le volume interne fermé entre les deux bouchons/éléments d'obturation axiale opposés et entouré par la membrane formant la paroi perméable. Au moins un des bouchons peut éventuellement être aussi perméable, par exemple en étant sous forme de grille ou tamis adapté pour la retenue du matériau de dessiccation pouvant venir en contact contre une face interne du bouchon correspondant. De préférence, un seul des éléments d'obturation axiale est situé dans l'espace interne creux. Cet élément d'obturation axiale est typiquement un bouchon fermé de façon hermétique aux liquides contre une zone annulaire de la structure porteuse contre laquelle est surmoulée une extrémité de la paroi perméable.
Dans une option, tout ou partie du matériau de dessiccation peut être contenu dans un sachet poreux permettant à du liquide reçu dans le volume interne d'être mis en contact avec ce matériau tout en pouvant continuer de circuler vers une région de sortie de la cartouche. Eventuellement, le sachet poreux peut constituer à lui seul la paroi perméable.

Selon une particularité, la cartouche filtrante est adaptée pour se loger de façon amovible dans un boîtier de filtre pourvu d'une entrée et d'une sortie. Le média peut présenter une face externe délimitant dans le boîtier une zone de circulation pour liquide brut, communiquant avec l'entrée.

Dans des modes de réalisation, la cartouche filtrante peut présenter l'une et/ou l'autre des particularités suivantes :
- le premier élément filtrant inclut un flasque (typiquement annulaire) ayant une portion radiale pourvue dudit orifice axial et recouvrant une extrémité axiale du média.
- un organe de fixation participant au positionnement de la cartouche, par exemple en se fixant à l'intérieur d'un couvercle, peut être rapporté ou inclus dans un flasque du premier élément filtrant situé axialement à l'opposé du flasque délimitant l'orifice axial par lequel s'insère le deuxième élément filtrant.
- la cartouche est apte à coopérer et réaliser la filtration dans un boîtier pourvu d'une entrée pour du liquide brut et d'une sortie pour le liquide purifié, la sortie étant par exemple sous forme de conduit tubulaire raccordé fluidiquement à l'espace interne creux via l'orifice axial prévu dans le flasque.
- le média filtrant annulaire peut être adapté pour la séparation d'impuretés solides (restant sur l'extérieur) par filtration centripète.
- le média filtrant présente une face externe et une face interne, avec une absence d'écoulement axial grâce à des capots d'extrémité opposés constituant chacun tout ou partie d'un flasque, de sorte que liquide purifié ayant traversé le média filtrant ne peut ressortir que par un débouché axiale de l'espace interne creux.
- l'espace interne creux est délimité par la face interne du média, qui délimite, au moins pour partie, une zone d'aval pour la circulation du liquide purifié.
- l'ossature (structurelle) permet le maintien d'une face interne du média par laquelle sort du lubrifiant purifié.

Selon une particularité, le deuxième élément filtrant présente deux extrémités axiales opposées l'une à l'autre suivant la direction de l'axe central du média, la paroi perméable ayant ou consistant en une portion latérale tubulaire s'étendant de façon annulaire, autour de l'axe central.
La portion latérale tubulaire peut former une couche de filtration centripète, et s'étend par exemple, depuis la première portion de fond, en direction inverse d'un sens d'insertion du deuxième élément dans l'espace interne creux.
Le matériau de dessiccation peut former une couche filtrante, distincte de la paroi perméable et traversée par l'axe central.

Le matériau de dessiccation peut remplir un sac poreux, un tronçon à couche/paroi filtrante ou un organe rigide d'enveloppement présentant une porosité, distinct de la paroi perméable. Un sac ou organe d'enveloppement poreux peut alors être disposé transversalement par rapport à l'axe central pour remplir entièrement la section transversale délimitée par la paroi perméable. Optionnellement, le matériau de dessiccation est composite et/ou complété par un matériau additionnel d'absorption d'eau venant former une surcouche ou un remplissage juxtaposé au matériau de dessication. Dans des variantes, au moins une partie du matériau de dessication peut faire partie de la paroi perméable.

Selon une particularité, le connecteur est formé/allongé longitudinalement, par exemple comme une portion cylindrique ou tubulaire, en étant pourvu d'une partie d'ancrage qui s'étend axialement en saillie depuis une région périphérique entourant la première portion de fond de la paroi perméable.

Dans des modes de réalisation, on peut avoir recours à au moins l'une des particularités suivantes :
- le deuxième élément filtrant peut présenter un tube ajouré à l'intérieur duquel ou contre lequel s'étend (intérieurement) la paroi perméable.
- la toile/paroi perméable est réalisée par exemple sous forme de toile à base de matériau plastique et pourvue d'un maillage qui permet une filtration, de préférence une filtration plus fine que le média du premier élément filtrant.
- le premier élément filtrant inclut en outre un flasque (flasque d'extrémité situant l'accès d'insertion pour le deuxième élément filtrant) ayant une portion radiale pourvue de l'orifice axial et recouvrant une extrémité axiale du média.
- les deux extrémités axiales du deuxième élément filtrant comportent une première extrémité axiale incluant la partie d'ancrage qui est par exemple pourvue d'au moins un rebord de prise formant une butée qui coopère avec une portion annulaire rigide de l'ossature, dans l'espace interne creux, pour s'opposer à une extraction axiale du deuxième élément filtrant suivant une première direction axiale.
- les deux extrémités axiales comportent une deuxième extrémité axiale qui s'étend en saillie axialement par rapport au flasque suivant la première direction axiale, à l'extérieur de l'espace interne creux.
- la deuxième extrémité axiale du deuxième élément filtrant peut présenter des moyens d'appui, par exemple sous forme de pattes radiales, pour permettre un appui axial sur le flasque ou sur l'ossature, en s'appuyant axialement en sens opposé à la première direction et par l'extérieur du premier élément filtrant.
- le connecteur permet une fixation indémontable du deuxième élément filtrant dans le premier élément filtrant.
- le connecteur est fixé au flasque ou à l'ossature, dans une position axiale déterminée, par utilisation d'une ou plusieurs parties de contact, axialement distantes de la partie d'ancrage (préférentiellement annulaire).
- les parties de contact sont distribuées latéralement sur le connecteur, par exemple dans différents secteurs angulaires (au nombre de trois ou quatre au moins), en alternance avec des encoches ou zones évidées permettant un passage de liquide entre le flasque et une portion latérale tubulaire de la paroi perméable.
- le premier élément filtrant supporte (directement) l'unité préassemblée formant le filtre de dessiccation, et non l'inverse, sachant que la partie extérieure du deuxième filtrant forme une extrémité de la cartouche qui est distale par rapport au couvercle destiné à se raccorder à la cartouche.

Typiquement, le connecteur solidarise le deuxième élément filtrant de façon définitive au premier élément filtrant (sans retrait possible hors de l'espace interne, sauf à casser ou déformer irrémédiablement la structure rigide servant à la connexion). Dans certaines variantes, le connecteur se verrouille par un mouvement de rotation autour de l'axe du média, par exemple par vissage ou par une connexion baïonnette, avec une prise réalisée dans l'espace interne contre l'ossature de maintien de la face interne du média filtrant. Un tel verrouillage peut rendre la fixation réversible, par exemple lorsque la rotation inverse est possible.

L'ossature (intérieure) peut être réalisée d'une seule pièce, sans organe entretoise susceptible d'interférer :
- avec l'insertion du deuxième élément filtrant ;
- avec le montage d'une vanne à clapet anti-retour, s'insérant au moins en partie dans l'espace interne creux avec une un organe de fixation porté par la vanne pour la connexion au couvercle servant à retirer/ extraire la cartouche hors du bol formé par le support fixe du boîtier de filtration.
Eventuellement une partie mobile du clapet est apte, par exemple à l'état ouvert de ce clapet, à se déplacer dans une zone creuse centrale de la première extrémité axiale du deuxième élément filtrant.

Les caractéristiques exposées dans les paragraphes suivants peuvent, optionnellement, être mises en oeuvre, indépendamment les unes des autres ou en combinaison les unes avec les autres :
- le premier élément filtrant est pourvu d'une vanne incluant un clapet anti-retour.
- le clapet anti-retour est monté dans l'espace interne creux au travers d'une ouverture axiale formant un accès à l'espace interne creux, à l'opposé dudit orifice axial.
- le clapet anti-retour est mobile axialement dans l'espace interne creux, parallèlement à l'axe central, et sollicité en direction opposée au deuxième élément filtrant par un élément de rappel.
- l'élément de rappel est à effet de rappel élastique, par exemple sous la forme d'un organe déformable tel qu'un ressort, optionnellement un ressort hélicoïdal.
- le clapet est du type poussé par un système à précontrainte (ou tout système de contrainte), par exemple un ressort.
- au-delà d'un seuil de force pour repousser l'élément de rappel en surmontant la force de rappel ou précontrainte, le clapet peut avancer ou reculer dans l'espace interne, par exemple de façon à s'éloigner du flasque contre lequel la vanne a été montée.
- l'élément de rappel peut s'étendre entre un organe de fixation pour attacher la cartouche à un couvercle (couvercle de délimitation d'une chambre de filtration) et une partie d'obturation, transversale par rapport à l'axe central et apte à réaliser un contact annulaire contre une zone de siège, éventuellement définie par une pièce de recouvrement du flasque (le tube d'ossature peut être symétrique et la structure des deux flasques du premier élément filtrant peut aussi être identique, ce qui permet d'orienter les flasques indifféremment dans un sens ou dans l'autre pour le montage du deuxième élément filtrant et de la vanne anti-retour, par des accès opposés de même taille et de même forme géométrique).
- le moyen de précontrainte, à effet de rappel élastique ou similaire, associé au clapet peut présenter une première extrémité fixe dans la cartouche, en s'étendant longitudinalement dans l'espace interne creux entre une entretoise rendue solidaire de l'ossature intérieure du premier élément filtrant et un organe transversal ou portion radiale portée/formée par le clapet, éventuellement formant directement la partie d'obturation du clapet.
- l'effet de rappel peut résulter de la compression d'un matériau alvéolaire ou poreux ou encore d'un rapprochement/contraction d'un agencement à deux organes magnétiques exerçant entre eux une force, par exemple axiale, de répulsion.
- le premier élément filtrant supporte un corps annulaire (corps de vanne) apte à guider en coulissement l'organe mobile d'obturation appartenant à la vanne à sens unique formant le clapet anti-retour.
- le premier élément filtrant comporte, dans l'espace interne creux, au moins un élément de rappel élastique, de préférence déformable en réponse une surpression en aval de la cartouche lors de son fonctionnement dans un boîtier de filtration.
- l'élément de rappel est apte à solliciter par défaut, de préférence par une sollicitation longitudinale (qui peut être en sens de rétractation d'un ressort) de sens opposé à la première direction axiale, l'organe d'obturation contre une surface d'arrêt de forme annulaire qui peut être formée par un flasque additionnel, opposé au flasque formant l'orifice axial où sort du liquide purifié.
- le flasque additionnel présente une ouverture centrale permettant la circulation de liquide non purifié, uniquement dans des conditions de pression suffisantes pour déplacer l'organe d'obturation vers une position d'ouverture d'un accès de dérivation (par l'ouverture centrale du flasque additionnel) à la zone d'aval formée par l'espace interne creux.

Avec une telle structure du premier élément filtrant, on limite des effets indésirables liés à un colmatage. Ainsi on peut obtenir par défaut une étanchéité du côté du flasque additionnel, avec le clapet qui sépare (tout comme le média avec les deux flasques associés) la zone d'amont périphérique (pour liquide brut) de la zone d'amont (pour liquide purifié) qui inclut le sous-volume de l'espace interne creux au niveau duquel est disposé le filtre de dessiccation. Les deux flasques, à savoir le flasque additionnel et le flasque entourant le filtre de dessiccation, peuvent être réalisés chacun en une seule pièce en matériau plastique. Le flasque additionnel est par exemple pourvu d'une unique ouverture axiale de passage entre l'extérieur de la cartouche et la zone d'aval (pour liquide purifié à travers le média).

Selon une particularité, les moyens de dérivation présentent/délimitent :
- un premier accès pour permettre à du liquide de contourner le média filtrant pour accéder à l'espace interne creux, le premier accès correspondant à un conduit de la vanne anti-retour (par exemple un conduit délimité par le corps de vanne) ; et
- un deuxième accès (par exemple agencé à la suite du/en série par rapport au premier accès lorsque le clapet anti-retour est à l'état ouvert) pour permettre à du liquide déjà présent dans l'espace interne creux de contourner la paroi perméable.

Optionnellement, le deuxième accès correspond à au moins une zone, de préférence annulaire, d'espacement radial entre :
- un tube ajouré du deuxième élément filtrant qui traverse l'orifice axial ;
- et un élément tubulaire ajouré comparativement plus large qui constitue tout ou partie de l'ossature du premier élément filtrant.

Selon une particularité, le tube ajouré est porteur d'une membrane, de préférence ayant une épaisseur constante, constitutive de la paroi perméable. Le tube ajouré, plus long que large, peut entourer cette membrane, qui peut être une membrane en forme de cuve de préférence fixée par surmoulage. La portion tubulaire de la membrane peut présenter au moins une extrémité qui est bouchée au moins sur un côté axial, par un élément plastique d'obturation, qui peut éventuellement recouvrir ou être disposée le long d'une bordure annulaire d'extrémité de la membrane.

Selon une autre particularité, le matériau de dessication contient l'un au moins parmi un gel déshydratant incluant de la silice, au moins un polymère de type hydrogel (super absorbant), de l'argile, de la bentonite et/ou une structure à zéolithes. Eventuellement, la paroi perméable présente une taille maximale de maille inférieure ou égale à 300 micromètres, de préférence de l'ordre de 150 micromètres. La maille peut entièrement envelopper le matériau de dessication/séchage, optionnellement en étant choisie pour retenir tout agrégat ou particule solide accidentellement détaché de l'élément séchant incluant du matériau de dessiccation.

Optionnellement, le volume interne (délimité/entouré par la paroi perméable) est expansible par utilisation d'un bouchon mobile suivant la direction de l'axe central et disposé dans l'espace interne creux. Eventuellement, le bouchon est contraint par un élément de rappel élastique qui peut être par exemple porté par le deuxième élément filtrant.

Une structure tubulaire de l'ossature, en particulier avec une structure obturée aux deux extrémités axiales, avec ou sans accès axial du volume interne du filtre de dessication (accès adjacent à la partie d'ancrage), constitue une association avantageusement compatible avec une circulation de liquide entre la face interne du média filtrant traversée par ce liquide et l'orifice axial, sans générer de perte de charge puisque du liquide en circulation dans l'espace interne creux du premier élément filtrant peut aussi bien traverser le filtre de dessiccation en traversant (au moins une fois, de préférence deux fois) la paroi perméable à effet de filtration que poursuivre axialement autour du deuxième élément filtrant sans filtration supplémentaire s'ajoutant à celle réalisée par le ou les média(s) formant la partie filtrante du premier élément filtrant.

Selon un autre aspect, il est proposé un dispositif de filtration pour la purification d'un liquide de moteur (huile typiquement, par exemple pour un moteur à combustion), le dispositif comprenant :
- un boîtier de filtration qui présente une base ou support pourvu d'une entrée pour liquide brut et une sortie pour liquide purifié, le boîtier définissant un volume intérieur et présentant un fond avec un conduit tubulaire formant une sortie, de préférence en incluant une zone annulaire d'appui (pour un appui de la cartouche, par exemple un appui contre le flasque entourant le deuxième élément filtrant) ;
- un couvercle pour empêcher l'accès au volume intérieur et se fixant de manière amovible sur une paroi latérale annulaire du support, pouvant permettre une fermeture étanche du boîtier ;
   et
- la cartouche filtrante selon l'invention, logée de façon amovible dans le volume intérieur du boîtier de manière à présenter le conduit tubulaire en alignement avec l'espace interne creux (et pouvant éventuellement prendre appui axialement contre une surface de contact de la cartouche formée ou supportée par un flasque appartenant au premier élément filtrant pour recouvrir une extrémité axiale du média) ;
dans lequel le couvercle est apte à venir en prise avec un organe de fixation prévu sur la cartouche axialement à l'opposé des deux régions de sortie (à l'opposé du flasque servant à délimiter l'orifice axial), le premier élément filtrant et le deuxième élément filtrant étant assemblés de façon inséparable et/ou sans former de bord de retenue axiale par le support s'opposant à un retrait de la cartouche, ce qui permet à la cartouche d'être extraite d'un bloc avec le couvercle lorsque ce dernier est séparé du support.

Avec cette conception, un dispositif de filtration peut être obtenu avec un assemblage simple et compact qui limite les contraintes lors de la production à haute cadence de cartouches et lors de l'assemblage des cartouches dans le boîtier de filtration. Le support peut être un élément fixe dans le véhicule, une fois le dispositif de filtration monté, tout ou partie de la cartouche pouvant constituer la partie jetable lors d'une opération de rechange.

Selon une particularité, le deuxième élément filtrant constituant le filtre de dessiccation est inséré :
- de façon amovible dans le conduit tubulaire avec une zone d'écoulement laissée libre entre la paroi perméable et une face intérieure du conduit tubulaire ; et
- de préférence de façon indémontable, dans l'espace interne creux.
Cette disposition favorise une intégration compacte de la cartouche, dans le boîtier.

Dans des options, il est prévu une ou plusieurs des particularités suivantes :
- le connecteur présente une couronne discontinue/ajourée ou au moins deux pattes radiales en saillie pour limiter l'insertion du deuxième élément filtrant dans l'espace interne creux.
- le matériau de dessication est entouré par une portion tubulaire de la paroi perméable, qui s'étend par exemple longitudinalement autour d'un axe central du conduit tubulaire.
- le couvercle peut se coupler à la base par une rotation autour d'un axe qui est confondu avec ou parallèle à l'axe du conduit tubulaire.
- la paroi perméable s'étend à la fois à l'intérieur (par une partie insérée) et l'extérieur de l'espace interne creux (par sa partie externe typiquement en saillie par rapport au reste de la cartouche).
- la paroi perméable est fonctionnellement associée à un élément de fermeture axiale du volume interne situé à l'extérieur de l'espace interne creux, ce qui favorise une sortie centrifuge du liquide asséché/déshydraté par la première région de sortie, donc un changement de direction dans la circulation de liquide au travers du matériau de remplissage du filtre dessiccation, au fur et à mesure qu'on s'éloigne de la première extrémité du deuxième élément filtrant.
- un premier élément d'obturation axiale, rapporté et opposé par exemple à un deuxième élément d'obturation axiale/ de fond situé dans l'espace interne creux, peut être en contact et directement solidaire d'une extrémité rigide, optionnellement annulaire, d'un tube ajouré qui définit la forme générale extérieure du deuxième élément filtrant.
- le premier élément d'obturation axiale s'étend axialement plus à l'intérieur/sur le dessous par rapport à l'extrémité rigide du tube ajouré de l'élément filtrant.
- le tube ajouré définit un débouché axial, par l'extrémité rigide de forme annulaire, ce débouché affleurant au ou étant situé dans le conduit tubulaire du support appartenant au boîtier, le tube pouvant aussi être ajouré latéralement aussi bien à l'intérieur qu'à l'extérieur de l'espace interne creux.
- le tube ajouré est formé en une seule pièce incluant le connecteur.

Avec une conception du deuxième élément filtrant en alignement (deuxième élément typiquement allongé), optionnellement coaxiale, par rapport au premier, il est permis d'augmenter la surface de la paroi perméable qui dispose par exemple d'un maillage plus fin que le média filtrant. Le flux purifié sortant du média filtrant peut ainsi rapidement rejoindre la sortie définie au niveau du conduit tubulaire du boîtier(sortie du dispositif de filtration). Cela permet de limiter les pertes de charge, avec des trajectoires courtes dans la zone d'aval du média filtrant (zone d'aval séparée de la zone d'amont par le premier élément filtrant).

Selon une autre particularité, le dispositif comporte une vanne à clapet anti-retour pourvue d'un corps monté solidaire d'un flasque du premier élément filtrant (pour recouvrir l'autre extrémité axiale du média) qui est axialement à l'opposé du flasque pourvu de l'orifice axial (au niveau duquel s'étend le deuxième élément). Une telle vanne permet de contourner le média filtrant, par exemple en réponse à une pression de liquide brut, amené par l'entrée, s'exerçant axialement sur le clapet en direction du deuxième élément filtrant. Optionnellement, le premier élément filtrant est connecté au couvercle, de préférence de façon amovible, par l'organe de fixation qui appartient à la vanne. Eventuellement, une seule pièce permet d'inclure/former le corps de la vanne (qui délimite le passage de dérivation par une extrémité du premier élément filtrant) ainsi que l'organe de fixation.

Selon une particularité, seul le premier élément filtrant est engagé contre des surfaces du boîtier, le deuxième élément filtrant pouvant être maintenu espacé du boîtier à l'état monté de la cartouche filtrante telle que précédemment décrite. Le dispositif de filtration est ainsi pourvu d'une cartouche avec un contact entre des parties robustes pour son maintien dans la chambre de filtration, sans risque de dégrader une toile formant la paroi perméable.

Selon une particularité, le boîtier a une partie fixe tel qu'un bol qui forme un fond du boîtier et présente le support de montage. La longueur d'une interface d'accouplement bol-couvercle, mesurée parallèlement à l'axe du conduit tubulaire, peut être suffisante pour égale ou dépasser la longueur d'une partie en saillie extérieure du deuxième élément filtrant, de sorte qu'un centrage peut avoir lieu avant que le deuxième élément filtrant pénètre dans le conduit tubulaire du support de montage. Le couvercle peut optionnellement être adapté pour être vissé sur le bol en présentant un organe de fixation traversé par l'axe central pour se mettre en prise avec la cartouche filtrante.

Selon une autre particularité, le média filtrant s'étend entre le flasque formant un appui pour le conduit tubulaire et un autre flasque annulaire traversé par une pièce formant l'organe de fixation du couvercle lorsque la cartouche filtrante est fixée au couvercle.

Selon un aspect, il est prévu d'utiliser la cartouche filtrante dans un boîtier de filtre du genre ayant une base (typiquement fixe) et un couvercle amovible, avec la possibilité de remplacer la cartouche. En particulier, il est proposé une utilisation de la cartouche filtrante du type susmentionné dans un boîtier pour permettre une filtration de liquide de lubrification, dans laquelle le deuxième élément filtrant, pouvant être obtenu en tant qu'unité préassemblée avec la paroi perméable qui permet de séparer le connecteur (ce connecteur étant par exemple réalisé en tant que tube ajouré) du volume interne où le liquide de lubrification est mis au contact du matériau de dessiccation, est :
- d'abord inséré dans l'espace interne creux par l'orifice axial du premier élément filtrant,
- puis rendu (indirectement) solidaire d'un couvercle d'un boîtier par l'intermédiaire d'un organe de fixation monté fixe dans le premier élément de filtrant à l'opposé de l'orifice axial, le premier élément filtrant supportant le deuxième élément filtrant lors d'une rotation du couvercle exercée pour ouvrir et respectivement fermer le boîtier.

On comprend que le premier élément filtrant supporte le deuxième élément filtrant, en particulier lors de manipulations pour retirer la cartouche du boîtier. Le couvercle se retire pour extraire non seulement le premier élément filtrant mais aussi le deuxième élément filtrant. Typiquement, le premier élément filtrant sert ainsi d'intermédiaire pour retirer le deuxième élément filtrant, en même temps que le couvercle amovible (couvercle du boîtier).

### Brève description des dessins

D'autres caractéristiques, détails et avantages apparaîtront à la lecture de la description détaillée ci-après, et à l'analyse des dessins annexés, sur lesquels :
la Figure 1 est une vue en coupe longitudinale, parallèlement à un axe central traversant une sortie pour liquide filtré, d'un dispositif de filtration dans une position finale de montage de la cartouche associée, avec un filtre de dessiccation assemblé dans une zone d'aval par rapport à l'élément filtrant qui le supporte.
la Figure 2 montre en perspective une cartouche conforme à un mode de réalisation de l'invention, ainsi qu'un exemple de couvercle utilisable pour monter cette cartouche dans un dispositif tel que celui illustré sur la figure 1.
la Figure 3 montre, en perspective partiellement éclatée, un assemblage de composants pouvant s'insérer chacun dans l'espace interne creux délimité par une face interne d'un média filtrant annulaire, avec le filtre de dessiccation déjà monté dans une structure tubulaire/tube constitutif d'une ossature participant au maintien du média filtrant.
la Figure 4A illustre un exemple de réalisation d'un filtre de dessiccation, ici à section généralement cylindrique, avec un volume interne délimité par une toile ou paroi perméable d'enveloppement.
la Figure 4B illustre un exemple de remplissage en matériau de dessiccation, ici dans un sachet qui est apte à être introduit dans le volume interne d'un filtre à dessication par un accès axial, par exemple avant obturation de cet accès axial.
la Figure 5 est une vue en coupe longitudinale tournée à 90° par rapport à l'exemple de la figure 1, permettant d'illustrer une circulation du liquide de lubrification dans un dispositif de filtration pourvu de deux éléments filtrants dont l'un constitue le filtre de dessiccation par lequel passe une fraction du liquide de lubrification.

### Description des modes de réalisation

Il est exposé ci-après, de façon détaillée, plusieurs exemples de modes de réalisation non limitatifs. Sur les différentes figures, des références identiques indiquent des éléments identiques ou similaires.

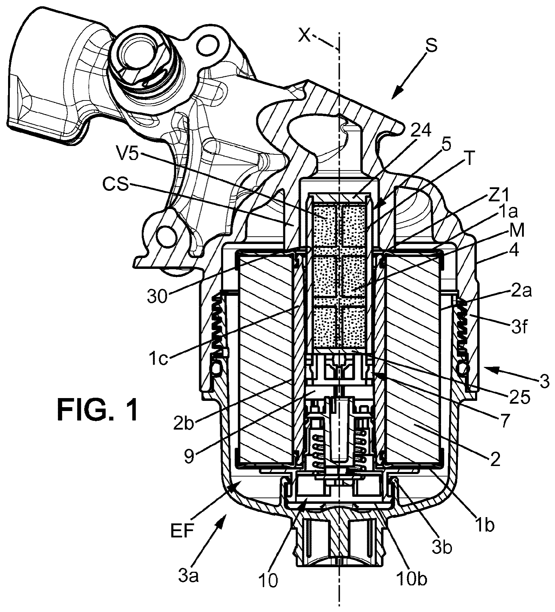

En référence aux figures 1, 2 et 5, le dispositif F pour la filtration de liquide comporte un support S réutilisable et un assemblage d'éléments filtrants qui est jetable, appelé cartouche filtrante 1. La cartouche filtrante 1 comporte un premier flasque 1a, pouvant reposer/siéger sur un conduit tubulaire CS du support S, un deuxième flasque 1b, un élément ou structure intérieure, appelé ossature 1c, de forme sensiblement tubulaire et un média filtrant 2 disposé autour de l'ossature 1c et à travers laquelle peut passer le liquide à filtrer, par exemple de l'huile de lubrification. Le média filtrant 2 est interposé entre le flasque 1a et le flasque 1b qui recouvrent les extrémités axiales respective du média 2.

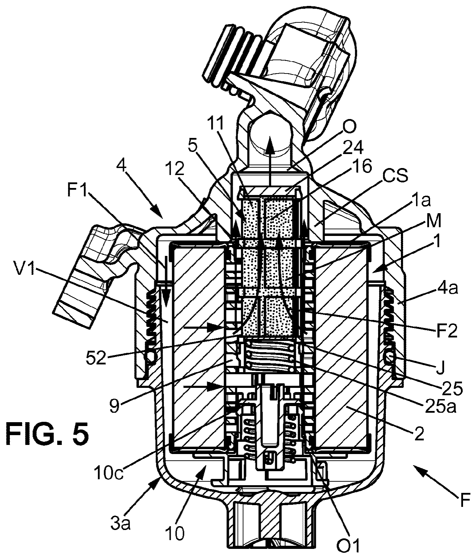

Le média filtrant 2 permet de filtrer les impuretés, notamment solides, contenues dans le liquide. Le média filtrant 2 présente ici une forme annulaire en s'étendant autour d'un axe central Z qui définit une direction longitudinale de la cartouche 1. Le média filtrant présente une face externe 2a autour de laquelle s'étend une zone d'amont et une face interne 2b qui délimite un espace interne creux 9. Ces 2 faces 2a et 2b s'étendent de l'une à l'autre des deux extrémités axiales du média 2. Dans la chambre de filtration délimitée par le boîtier 3, comme visible notamment sur la figure 5, le premier élément filtrant EF permet de séparer la zone périphérique d'amont V1 de la zone d'aval qui inclut tout ou partie de l'espace interne creux 9. Les termes amont et aval s'entendent par rapport au sens de la filtration réalisée par le média 2, qui est ici un sens de filtration centripète : de la face externe 2a vers la face interne 2b.

Le flasque 1a présente une forme annulaire avec une portion radiale entourant un orifice axial 30 qui forme un accès à l'espace interne creux 9. A l'opposé, ici dans une zone de recouvrement par le couvercle 3a, l'autre flasque 1b peut aussi présenter une ouverture O1, sensiblement aligné avec l'orifice axial 30 de sorte que l'axe central Z traverse ces deux ouvertures O1, 30.

La cartouche filtrante 1 peut être logée de façon amovible dans l'espace intérieur d'un boîtier 3 du dispositif F qui inclut le support S réutilisable. La cartouche 1 s'aligne ici, une fois fixée, suivant un axe X défini par un conduit tubulaire CS du support S, par exemple à l'aide du couvercle 3a de liaison avec le bol 4. Alternativement, la fixation peut également être réalisée par des organes de fixation situés en dehors du couvercle 3a. Le support S peut faire partie intégrante du bol 4 qui est de préférence attaché sur un véhicule via des organes de fixation appropriés.

Le boîtier 3 présente une entrée pour liquide brut (non représentée) et une sortie O pour liquide purifié. Le boîtier 3 est généralement conçu en deux parties avec un bol 4 visible sur la figure 1 et un couvercle 3a pouvant se visser sur le bol 4, un verrouillage additionnel ou alternatif pouvant être utilisé dans des variantes. Le bol 4 est fixe, réutilisable en incluant le support S. Le couvercle 3a est de préférence réutilisable aussi même si la fonction de couvercle amovible pourrait éventuellement être intégrée à la cartouche 1. Le couvercle 3a peut être du type fileté, ici avec une zone filetée 3f adjacente à un bord libre annulaire du couvercle, ou disposant de moyen de connexion adaptés pour s'engager et se verrouiller sur une interface du support S, ici une interface formée latéralement sur le bol 4. Un joint annulaire J, est par exemple prévu sur l'un parmi le couvercle 3a et la paroi latérale 4a, pour garantir une étanchéité dans une région proche d'un bord libre de la paroi latérale 4a (plus proche de ce bord libre que ne l'est la zone optionnelle d'accouplement en rotation).

Le couvercle 3a peut former une cavité de couvercle et dispose de moyens de fixation, avec ou sans crochets d'encliquetage 3b, s'étendant dans cette cavité pour venir en prise avec un ou des organes de fixation 10b formé(s) extérieurement sur un premier élément filtrant EF appartenant à la cartouche 1.

Plus généralement, le couvercle 3a présente tout organe de fixation adapté, de préférence avec une portion d'entraînement en rotation et/ou en poussée axiale de la cartouche filtrante 1 lors du vissage ou couplage similaire du couvercle 3a (sur lequel est fixée la cartouche 1). L'élément filtrant EF porte un organe de fixation 10b qui peut en outre constituer un élément de centrage de la cartouche 1 pour mettre en vis-à-vis une partie formant la sortie de liquide purifiée de la cartouche 1 avec le port d'accès à la sortie O du boîtier 3. Ce port d'accès est ici formé au niveau du conduit tubulaire CS.

Typiquement, le flasque annulaire 1b présente une unique ouverture O1, visible sur la figure 5, et peut ainsi être traversé par une partie d'insertion d'un tel organe de centrage et fixation 1 lorsque la cartouche 1 est fixée au couvercle 3a. Optionnellement, un degré de liberté axial peut être laissé pour permettre à la cartouche 1 de reculer en direction d'une partie de fond du couvercle 3a.

Dans l'exemple non limitatif de la figure 1 Le bol 4 est ici pourvu du conduit CS longitudinal qui définit la sortie O du boîtier 3 de filtration. La paroi latérale 4a du bol 4 entoure, avec un espacement radial, ce conduit CS qui est agencé pour pouvoir entourer une extrémité axiale de la cartouche par laquelle sort le liquide purifié, de sorte que le canal d'écoulement défini par le conduit CS est directement en regard d'un espace interne creux 9 de la cartouche 1, ici délimité par le média filtrant 2.

Dans la configuration montée de la cartouche 1, le conduit CS peut reposer sur le premier flasque 1a sans faire saillie dans l'espace interne 9, en étant décalé plus loin de l'axe Z par rapport à la bordure du flasque 1a qui délimite un orifice axial 30 compatible avec un écoulement de liquide purifié, en direction de la sortie O.

La paroi latérale 4a du bol 4 s'étend autour d'une face externe du média 2 annulaire. Ce média filtrant 2 sépare l'espace interne 9 pour liquide purifié (zone en aval en communication avec la sortie O) du volume périphérique V1 (zone en amont) dans lequel circule le liquide brut à purifier. La communication fluidique, de préférence étanche, de l'espace interne 9 avec la sortie O est réalisée à travers l'orifice axial 30 central du flasque 1a.

Dans certaines options, l'organe de fixation 10b peut appartenir à une vanne 10 qui s'intègre de façon compacte dans l'espace interne 9 à l'exception d'une extrémité d'appui axial portant l'organe de fixation 10b et venant recouvrir/reposer sur le flasque 1b. Une telle vanne 10, du type à clapet 10c mobile, peut permettre une dérivation en cas de problème dans la chambre de filtration (colmatage, par exemple au niveau de la face externe 2a du média), ce qui évite un blocage dans la circulation du liquide lubrifiant.

### Deuxième élément filtrant à effet sécheur

La cartouche 1 présente en outre une fonction d'assèchement, permettant à de l'eau d'être retenue. L'intégration de cette fonction peut être obtenue en attachant, au premier élément filtrant EF, une unité préassemblée formant un filtre de dessiccation 5 et placée dans la zone d'aval. Ce filtre 5 peut fonctionner comme un deuxième étage de filtration venant, suivant le sens de circulation de liquide dans la chambre de filtration, immédiatement après le premier élément filtrant EF. Dans tout ce qui suit, le filtre 5 est appelé deuxième élément filtrant.

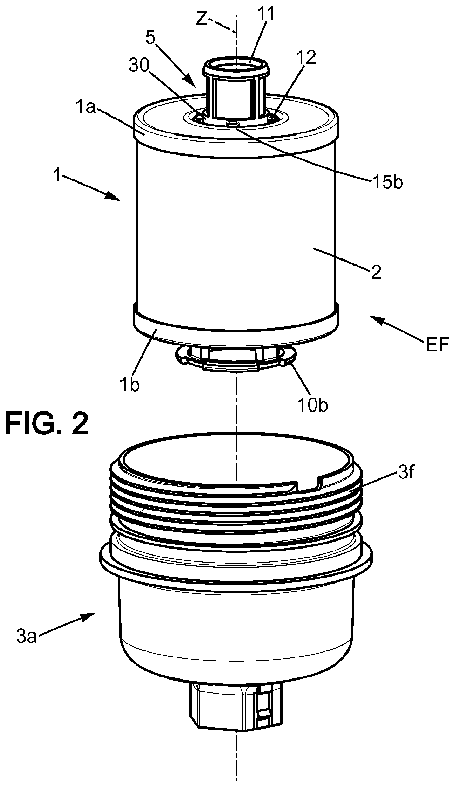

En référence aux figures 1 et 2, le deuxième élément filtrant est un filtre 5 pourvu d'une paroi perméable T entourant un volume interne V5, dans lequel est reçu du matériau de dessiccation M, M'. Le deuxième élément filtrant s'étend, au moins pour partie, dans l'espace interne creux 9, et peut traverser l'orifice 30 ou affleurer au niveau du flasque 1a, en correspondance ainsi avec une zone de sortie de la cartouche 1.

Un tube 6, ici rigide, du filtre 5 peut permettre de supporter :
- un premier élément d'obturation axiale, rapporté sur une extrémité du tube 6 pour empêcher une perte en matériau de dessiccation et/ou limiter le flux axial sortant du deuxième élément filtrant ; et
- un deuxième élément d'obturation axiale/ de fond apte à boucher le volume V5 de l'autre côté/à l'opposé du premier élément, ce deuxième élément étant situé dans l'espace interne creux à l'état monté du deuxième élément filtrant.
Le premier élément d'obturation axiale, appelé dans ce qui suit bouchon 24, peut être en contact avec et directement solidaire d'une extrémité rigide, optionnellement annulaire, du tube 6 qui est ajouré en définissant la forme générale extérieure du deuxième élément filtrant.

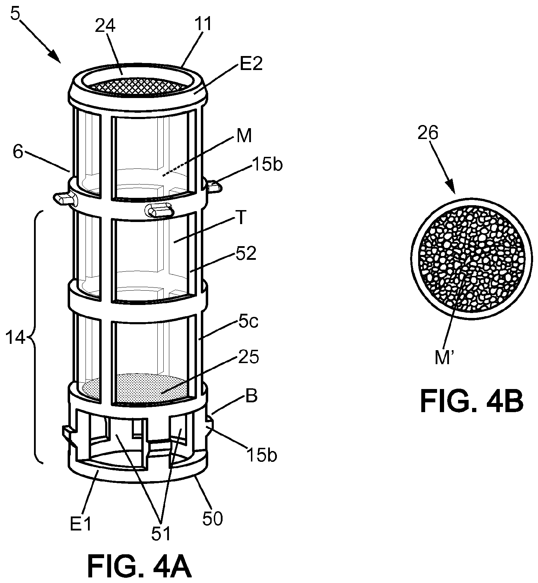

En référence à la figure 1 ou 4A, un support formant bouchon 25, par exemple rigide et disposant d'une bordure annulaire, peut supporter et maintenir tout ou partie du ou des matériaux M, M' utilisé(s) pour déshydrater le liquide de lubrification, par exemple de l'huile. Ce bouchon 25 peut correspondre au deuxième élément d'obturation axiale lorsque deux éléments d'obturation sont prévus. Ici dans les conditions normales de fonctionnement, ce liquide à déshydrater a déjà été purifié/filtré par le média 2 du premier élément filtrant EF. Le bouchon 25 peut présenter une face de contact (avec le matériau) retenant du matériau dans le volume interne V5. Ce support formant bouchon 25 peut en outre être rendu directement solidaire du tube structurel 6 délimitant la forme géométrique externe du deuxième élément filtrant.

Comme bien visible sur la figure 2, le deuxième élément filtrant peut être un filtre 5 ajoutant peu d'encombrement additionnel par rapport au premier élément filtrant EF. Il est ainsi entouré par le média 2 et peut reposer axialement sur l'ossature 1c ou éventuellement sur le flasque 1a par des pattes radiales 15a formant une partie des moyens de connexion prévus dans le deuxième élément filtrant pour la solidarisation au premier élément filtrant EF. Ici, le filtre 5 présente une extrémité libre formant tout ou partie d'une région de sortie 11 de liquide (liquide purifié et mis en contact avec le matériau de dessiccation M, M').

La paroi perméable T peut s'étendre à la fois à l'intérieur et l'extérieur de l'espace interne creux 9, en enveloppant le volume V5 recevant le matériau de dessiccation M, M'. A titre d'exemple et comme visible sur la figure 1, la paroi perméable T peut présenter ou consister en une portion latérale tubulaire agencée longitudinalement et parallèlement au média 2. Avec cette disposition, il est permis de réaliser successivement une première filtration de liquide centripète par le média 2 et une deuxième filtration de liquide centripète par la portion latérale tubulaire, tout du moins pour une première fraction de liquide avant une mise en contact de cette première fraction de liquide avec le matériau de dessiccation M, M' pour ensuite atteindre la région de sortie 11, en dehors de l'espace interne creux 9. Dans une option, le liquide ressort du filtre 5 de façon centrifuge, au travers d'une partie haute de la paroi perméable T. Bien qu'une paroi perméable T de forme cylindrique soit illustrée ici, d'autres géométries utilisant une portion latérale tubulaire peuvent être adoptées.

Il est permis de disposer le matériau de dessiccation M, M' de diverses manières dont le volume interne V5, de préférence en disposant ce matériau dans l'espace interne creux 9, avec éventuellement un décalage radial vers l'intérieur par rapport à la paroi latérale tubulaire de la toile où élément similaire formant la paroi perméable T. La paroi perméable T peut elle-même être surmoulée sur une partie intérieure du tube 6, qui se compose de segments rigides longitudinaux 5c (parallèles à l'axe Z) formant à intervalles réguliers, le long de l'axe Z, des croisements avec une partie périphérique en forme d'anneau, comme montré par exemple sur la figure 4A. Sur cette figure 4A, la paroi T et matériau M sont transparents pour une meilleure visibilité de l'intérieur du tube 6.

Le tube 6 est ici réalisé d'une seule pièce et peut s'étendre sensiblement sur la totalité de la longueur du filtre 5, définissant ainsi la plus grande dimension du deuxième élément filtrant. Un connecteur 7 est prévu pour une connexion au premier élément filtrant EF, ici une connexion sans contact avec le média 2. Le tube 6 peut former, à lui seul, le connecteur 7 qui présente :
- une partie 15a d'appui axial, par exemple formée adjacente à la région de sortie de liquide 11 et pouvant s'appuyer sur une extrémité du premier élément filtrant EF, par exemple sur l'ossature 1c, sensiblement au même niveau qu'une portion radiale du flasque 1 ;
- une partie d'ancrage 15b pourvue d'ergots R qui sont distribuées latéralement sur le connecteur 7, par exemple en faisant saillie (radialement vers l'extérieur) depuis l'une des parties périphériques en forme d'anneau ou depuis une extrémité basse formée au-delà de la toile ou moyen similaire (grille) formant la paroi perméable T, l'extrémité basse étant axialement opposée à la région de sortie de liquide 11.

La partie d'appui axial 15a peut présenter une ou plusieurs parties de contact, de préférence des parties de contact espacées les unes des autres. Ainsi les parties de contact sont formées en alternance avec des encoches ou zones évidées permettant un passage de liquide entre une bordure du flasque 1a délimitant l'orifice axial 30 et une portion latérale tubulaire de la paroi perméable T. Dans des variantes, la partie d'appui axial peut inclure des sous-parties souples, mobiles au niveau d'une région périphérique de l'orifice axial 30 pour libérer un ou des passage(s) de liquide en fonction des conditions de pression dans l'espace interne creux 9. Dans tous les cas, le deuxième élément filtrant peut présenter, au moins pour sa partie insérée dans l'espace interne creux 9, un périmètre réduit par rapport à un périmètre intérieur circonférentiel du média 2, mesuré au niveau de la face interne 2a. Ceci permet de créer un espace annulaire circonférentiel autour de la paroi perméable T pour autoriser la circulation, selon une trajectoire longitudinale, d'une deuxième fraction de liquide complémentaire de la première fraction de liquide, principale, passant par le deuxième élément filtrant avant de rejoindre la sortie O du boîtier 3 via la région de sortie 11.

Plus généralement, l'espacement latéral autour du deuxième élément filtrant peut permettre de disposer d'un accès 52 en dérivation du passage principal passant la première région de sortie 11, avec un débouché hors de la cartouche 1 par une deuxième région de sortie 12. Cette deuxième région de sortie 12 est décalée latéralement vers l'extérieur par rapport à la première région de sortie 11, tout en étant compatible avec un flux globalement orienté axialement vers l'extérieur pour sortir de l'espace interne 9, via l'orifice axial 30.

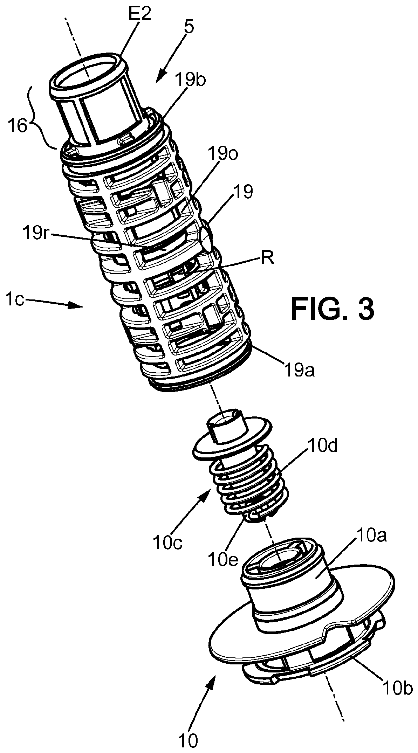

On comprend que le connecteur 7 peut être fixé au flasque 1a et/ou à l'ossature 1c, pour le maintien du deuxième élément filtrant dans une position axiale déterminée, par utilisation des parties 15a et 15b distribuées à différents niveaux de hauteur du tube 19 pouvant constituer tout ou partie de l'ossature 1c. En référence à la figure 3, le tube 19 forme une partie femelle de connexion pour un couplage avec le connecteur 7 mâle formé sur le filtre de dessication 5.

Dans l'exemple de la figure 3, le tube 19 présente latéralement des ouvertures 19o, ici plus larges que hautes, permettant au liquide sortant de la face 2b de rejoindre une zone plus centrale/proche de l'axe Z, avant de suivre une trajectoire axiale vers l'orifice axial 30. Tandis que les ouvertures 19o s'étendent toutes dans l'espace interne creux 9, le filtre 5 dispose d'une structure tubulaire (ici sous la forme d'une seule pièce constituant le tube 6 plus mince) ayant également des ouvertures de passage, par exemple délimitées entre les segments rigides longitudinaux 5c. Suivant la direction longitudinale, ces ouvertures se répartissent :
- dans un tronçon 14 inséré dans l'espace interne creux 9 ; et
- dans une partie en saillie 16, en projection axiale depuis l'orifice axiale 30.
Ces ouvertures forment chacune un accès direct à la portion tubulaire de la paroi perméable T qui s'appuie par l'intérieur contre la structure tubulaire du filtre 5. Dans cet exemple, la portion tubulaire de la paroi perméable T s'interrompt avant l'extrémité du filtre 5 où sont prévues au moins une ouverture axiale 50 et des ouvertures latérales 51. Une portion de fond en tamis ou à obturation hermétique, constituée par le bouchon 25, s'étend transversalement à l'intérieur/entre les segments rigides longitudinaux 5c. Ce type de bouchon 25, distinct de la membrane et optionnellement plus rigide, peut aussi permettre de filtrer un flux de liquide entrant dans le filtre 5 via les ouvertures 50 et 51, afin de compléter la portion tubulaire de la paroi perméable T.

Des ergots R de la partie d'ancrage 15b peuvent s'insérer dans des ouvertures latérales 19o du tube 19 par clipsage, de sorte que le connecteur 7 sur lequel est fixée de façon typiquement permanente la paroi perméable T, peut s'emboîter et s'enfoncer dans l'espace interne creux 9 jusqu'à ce qu'à l'obtention d'un état engagé final du connecteur 7. Dans cet état final d'engagement du connecteur 7, la partie d'appui axial 15a s'oppose à un enfoncement supplémentaire. Les ergots R peuvent être optionnellement formés, suivant une circonférence de la portion d'ancrage 15b, en alternance avec les ouvertures latérales 51, comme montré sur la figure 4A. Plus généralement les ergots R sont distribués dans une partie basse, ici la plus enfoncée dans l'espace interne creux 9, avec une partie biseautée facilitant l'insertion et une partie opposée formant une butée ou rebord de prise B.

Lorsque la hauteur de l'ouverture latérale 19o est sensiblement égale à l'extension longitudinale d'un ergot R correspondant, cela permet de conserver une position axiale déterminée du deuxième élément filtrant par rapport au premier élément filtrant EF. Optionnellement, une rotation du deuxième élément filtrant peut être tolérée, dans les limites dimensionnelles des ouvertures latérales 19o.
Par ailleurs, l'ossature 1c peut disposer de reliefs 19r, par exemple prévus directement sur le tube 19, qui sont radialement saillants vers l'intérieur et distribués dans plusieurs secteurs angulaires. Ces reliefs 19r peuvent permettre de maintenir tout ou partie dudit espacement radial, par exemple même en cas de gonflement radial vers l'extérieur d'une partie latérale en vis-à-vis de la paroi perméable T.

La structure de la cartouche filtrante 1 peut être simple avec une partie d'ancrage 15a sans partie mobile, ici avec un ou plusieurs rebords de prise B (formant chacun une butée axiale) qui coopère avec une portion annulaire rigide de l'ossature 1c, dans l'espace interne creux 9. Eventuellement la partie d'ancrage 1b permet de s'opposer à une extraction axiale du deuxième élément filtrant suivant une première direction axiale, sachant que la partie en saillie 16 formant l'extrémité axiale E2 présente des moyens d'appui (partie 15a) pour permettre un appui axial sur le flasque 1a ou sur l'ossature 1c, en sens opposé à la première direction, ce grâce à quoi que le connecteur 7 (intégré dans la structure du filtre 5) permet une fixation indémontable du deuxième élément filtrant dans le premier élément filtrant EF.

En référence à la figure 2, le flasque 1a comporte une portion radiale de forme annulaire avec une première face d'un premier côté où est disposé le média filtrant 2 et une deuxième face d'un deuxième côté opposé au premier côté suivant la direction de l'axe central Z. La portion radiale est par exemple sensiblement plane et s'étend de façon annulaire autour de l'orifice axial 30, ici central. Dans le mode de réalisation non limitatif de la figure 1, le flasque 1a présente une projection intérieure (éventuellement unique projection) sur sa première face, de préférence parallèle à l'axe central Z, formant une interface de fixation, de forme annulaire par exemple, avec une extrémité 19b du tube 19. Le flasque 1b peut être similaire ou identique au flasque 1a, avec le même type de fixation à une extrémité axiale 19a du tube 19.

En référence à présent aux figure 1 et 4, on peut voir que l'effet déshydratant peut être obtenu de diverses manières, dans le volume interne V5, grâce à la présence d'un ou plusieurs matériaux M, M' ayant un effet desséchant/de dessiccation, éventuellement distribués dans différents sous-étages à l'intérieur du deuxième élément filtrant. Le connecteur 7 présente par exemple une extrémité libre E1 qui est décalée axialement par rapport à la délimitation du volume interne V5 et qui inclut la partie d'ancrage 15b. L'extrémité libre E1 peut être réalisée dans une pièce structurelle du deuxième élément filtrant. Ce dernier présente deux extrémités axiales E1, E2 qui sont ici sensiblement de même section transversale, par exemple circulaire avec un même diamètre externe. Ces extrémités E1, E2, opposées l'une à l'autre suivant la direction de l'axe central Z à l'état monté dans l'élément filtrant EF, peuvent être délimitées par la même pièce tubulaire (par exemple moulée) en matériau plastique.

L'autre extrémité E2 peut s'étendre à l'extérieur de l'espace interne 9 en incluant du matériau M et/ou M' de dessiccation. En référence à la figure 4B, un matériau de dessiccation, typiquement de fine granulométrie, est contenu dans un sachet 26 poreux conçu pour retenir les grains du matériau de dessication 26. Un tel sachet 26 peut former ou participer au remplissage du volume V5 du deuxième élément filtrant. Eventuellement; le sachet 26 peut permettre d'éviter l'ajout d'une membrane déjà solidarisée au tube 6. Dans cas, la paroi perméable T est réalisée par tout ou partie du sachet 26. Bien que représenté avec une section généralement circulaire, le sachet 26 peut présenter une section plus aplatie, avec des plis et/ou suivant une autre géométrie compatible avec une insertion dans le tube 6 qui est typiquement obturé à ses extrémités axiales pour prévenir tout risque de déplacement axial du sachet 26 hors du tube 6.
L'accès à l'espace interne creux 9 correspond à l'orifice axial 30 qui est en correspondance avec une extrémité du tube 19 (tube rigide ajouré) constitutif de l'ossature 1c et ouvert à ses deux extrémités axiales 19a, 19b. Dans des options, le tube 19 présente deux extrémités 19a, 19b identiques apte à s'encliqueter contre un bord intérieur de prise d'un flasque de forme annulaire, dont l'un forme le flasque 1a. Ainsi, lorsque le premier élément filtrant EF présente deux flasques 1a, 1b opposés, ceux-ci peuvent être identiques.

Du matériau de dessiccation M, M' peut être agencé de façon à former une couche filtrante ou un ensemble filtrant, distinct de la paroi perméable T et traversé par l'axe central Z, par exemple dans au moins une couche montée sur et parallèlement à une partie réceptrice du bouchon/support 25. La hauteur totale d'extension du matériau de dessiccation M, M', éventuellement plus grande qu'un diamètre de la paroi perméable T, peut être limitée ou réduite pour une meilleure compacité, par exemple :
- inférieure ou égale à la hauteur totale de l'espace interne creux 9 ;
- et/ou inférieure à la hauteur totale du tube 6 (ces hauteurs étant mesurées suivant la direction de l'axe Z).

Dans les exemples illustrés, le filtre de dessiccation 5 est un deuxième élément filtrant compact qui est compatible avec un assemblage à haute cadence de la cartouche 1. Ceci n'exclut pas d'intégrer, dans des variantes, un troisième filtre une troisième couche filtrante, en amont ou en aval du premier élément filtrant, ou éventuellement en aval du deuxième élément filtrant. Dans des options préférées, le deuxième élément filtrant peut être dimensionné de façon à ne pas ajouter d'encombrement axial supplémentaire/ susceptible d'augmenter la hauteur de la chambre de filtration (chambre du boîtier 3), par comparaison avec la situation pour laquelle seul l'élément filtrant EF serait monté dans le boîtier 3 (cartouche où l'on aurait omis de monter le deuxième élément filtrant), comme bien visible dans le cas non limitatif des figures 1 et 5.

### Exemple de matériau déshydratant

Le matériau de dessication comporte au moins un composé desséchant/ déshydratant, par exemple capable d'absorber au moins jusqu'à 30 ou 50 fois sa masse en eau. Dans des options, le matériau de dessication M et/ou M' peut comprendre un composé ayant une structure cristalline poreuse, notamment un tamis moléculaire, de préférence un tamis moléculaire zéolithique (avec des zéolithes naturelles ou synthétiques). Les tamis moléculaires comprennent généralement une largeur de maille (taille des pores) de 3 à 4 angströms de sorte que les molécules d'eau peuvent être adsorbées de manière fiable à la surface interne.

Dans des formes de réalisation, le matériau de dessiccation peut inclure du gel de silice, par exemple présent sous forme de silicate d'aluminium. Un tel matériau peut comprendre des minéraux bentonite/argile, par exemple, contenant de l'oxyde d'aluminium, du sulfate de calcium, du carbonate de calcium, de l'hydrure de calcium, de l'oxyde de calcium, de l'hydroxyde de potassium, du sulfate de cuivre, de l'hydrure de lithium et d'aluminium et/ou de l'hydroxyde de sodium.

Dans des options utilisant des gels de silice, ceux-ci peuvent indiquer un épuisement de la capacité d'absorption d'eau par changement de couleur.

La géométrie des particules solides intégrant/constituant le matériau de dessiccation peut varier. Lorsque des tamis moléculaires zéolithiques sont prévus, des formes de billes (par exemple de 0,1 mm à 50 mm de diamètre), de bâtonnets, de membrane à fibres creuses, ou autre forme, éventuellement en matériaux composites, sont adaptés pour former au moins une couche du matériau, qui peut être interposé en travers du flux traversant le deuxième élément filtrant en direction de la sortie de la cartouche 1.

Dans des options, une structure mésoporeuse peut être conçue, par exemple dans au moins un polymère constitutif de tout ou partie du matériau de dessiccation. Également ou indépendamment de ce qui précède, au moins deux composants absorbants différents sont prévus. Eventuellement, un premier composant et un deuxième composant se complètent, soit dans la même couche soit dans deux positions spatiales différentes à l'intérieur du deuxième élément filtrant constituant le filtre 5 de dessiccation. Une pré-couche non absorbante d'eau peut être éventuellement prévue adjacente au matériau de dessiccation pour former une barrière d'atténuation de certaines turbulences ou effets d'écoulement rapides susceptibles de détériorer le matériau de dessiccation.

Optionnellement, la taille de maille de la paroi perméable T est choisie pour réduire légèrement la vitesse découlement ou atténuer des phénomènes de turbulence dans l'espace interne creux 9. Par exemple, la paroi perméable T présente une taille maximale de maille inférieure ou égale à 300 micromètres, de préférence de l'ordre de 150 micromètres.

### Exemple de fonctionnement de la cartouche

Dans l'exemple illustrée sur les figures 1 et 5, le bol 4 présente une section transversale circulaire ou annulaire et s'étend (via sa paroi latérale 4a) autour d'un axe longitudinal qui peut être éventuellement décalé par rapport à l'axe central X du conduit CS. Alternativement, l'axe X est un axe de symétrie de révolution pour la paroi 4a.

Cette structure/support S permet de positionner correctement la cartouche 1 sans indexation angulaire. Lors de la mise en place de la cartouche 1, la partie en saillie 16 du filtre 5 est aisément alignée avec l'axe X du conduit CS, sachant que l'axe Z de la cartouche 1 peut coïncider avec l'axe central X. La cartouche 1 peut être déjà solidarisée à l'avance avec le couvercle 3. De cette façon, le couplage en rotation du couvercle 3 avec le bol 4 permet une mise en place contrôlée de la cartouche 1, avec la partie en saillie 16 qui est insérée progressivement, de manière plus profonde, à l'intérieur du conduit CS, dans une configuration d'alignement qui évite des frottements entre la partie en saillie 16 formée comme une extrémité axiale libre de la cartouche 1 et le support S.

Une option d'écoulement de liquide est plus particulièrement illustrée sur la figure 5. L'ossature 1c du premier élément filtrant EF et une paroi latérale externe/tubulaire du deuxième élément filtrant, incluant la paroi perméable T, sont en regard l'une de l'autre dans l'espace interne creux 9 avec un espacement radial, permettant un écoulement en direction de l'orifice axial 30 pour atteindre le conduit CS. A titre d'exemple non limitatif, l'espacement radial peut atteindre au moins 1 ou 2 mm, éventuellement sans dépasser 6 mm. Alternativement ou en complément, l'ossature 1c et la paroi perméable T sont en chevauchement l'une sur l'autre en délimitant des canaux intercalaires longitudinaux pour la circulation du liquide jusqu'à l'orifice axial 30.

Plus généralement, au niveau du flasque 1a (qui s'étend ici perpendiculairement l'ossature 1c), on comprend qu'il est prévu un espacement pour l'écoulement d'un flux (fraction du flux total sortant de la cartouche) de liquide purifié par le média 2. Pour cela, le flasque 1a formant l'orifice axial 30 permet de définir au moins une section de passage de cet orifice 30, agencée(s) de façon périphérique par rapport à la paroi perméable T, permettant à du liquide présent dans l'espace interne creux 9 de circuler hors de la cartouche 1. Dans l'exemple illustré il est formé, en sus de la région de sortie 11 principale pour le flux ayant traversé la paroi perméable T du filtre 5, une autre région de sortie 12 pour faire sortir du liquide hors de la cartouche 1, typiquement via l'orifice axial 30 sans passer par la paroi perméable T. Dans des variantes, la région de sortie 12 périphérique peut se distribuer en plusieurs canaux/passages formées dans le flasque 1a autour d'un orifice central plus large pour le passage du deuxième élément filtrant.

Dans des options avec une vanne 10 de dérivation, le tube 6 ou structure porteuse analogue de la paroi perméable T du deuxième élément filtrant peut être inséré d'un côté, au travers d'un flasque (ici le flasque1a), tandis que le corps 10a de la vanne 10 est inséré dans l'espace interne 9 par l'autre flasque (ici le flasque 1b, via l'ouverture centrale O1).

Le liquide de lubrification qui est reçu dans la chambre de filtration, circule d'abord axialement dans la zone d'amont V1, périphérique à la cartouche 1, comme illustré par une flèche (ici descendante) sur la gauche dans la figure 5. Ce liquide peut circuler ensuite de façon centripète pour atteindre l'espace 9 via la face interne 2a : c'est une première filtration centripète. Cet espace interne 9 correspond ici à une zone d'aval par rapport au premier élément filtrant EF. La paroi perméable T, par exemple contenant du polyamide, peut présenter un maillage plus serré pour retenir des particules fines ayant pu traverser le média filtrant 2.

La paroi perméable T, avec sa portion latérale tubulaire agencée longitudinalement et parallèlement au média 2, est compatible avec une deuxième filtration centripète avant une mise en contact de cette première fraction de liquide avec du matériau de dessiccation M, M' présent dans le volume interne V5 du filtre 5. Comme visible sur la figure 5, une partie du liquide déjà purifié circulant dans l'espace interne 9 peut optionnellement contourner le bouchon 25 pour rejoindre la portion latérale tubulaire de la paroi perméable T. La ou les ouvertures 50, 51 prévues à une extrémité libre du deuxième élément filtrant, favorisent la circulation sous le bouchon 25 avec la présence d'une zone en creux éventuellement utile pour recevoir une partie du clapet 10c de la vanne lorsque ce dernier recule dans l'espace interne creux 9 en direction du deuxième élément filtrant. Le flux ayant pénétré le volume V5 suivant une trajectoire centripète peut rejoindre la première région de sortie 11. La partie du flux de liquide atteignant le matériau de dessiccation M, M', ici par une deuxième filtration centripète (et éventuellement aussi par une filtration axiale dans des variantes), peut être ainsi asséchée/déshydratée avant de rejoindre la sortie O du boîtier 3 de filtration.

Dans des exemples de réalisation préférés, cette partie qui est traitée (déshydratée) ne constitue qu'une fraction du flux total d'huile ayant traversé la chambre de filtration. A chaque passage, l'huile sera ainsi partiellement traitée avec une diminution significative de la teneur en eau (si de l'eau est présente). Le flux circulant autour du deuxième élément filtrant permet de réduire les effets de chute de pression.

Dans une option, comme visible par exemple sur la figure 5, le support/bouchon 25 peut être décalé axialement par rapport à l'extrémité libre/insérée dans l'espace 9 du tube 6, en étant sollicité vers le matériau M et/ou M' par un élément de rappel élastique tel qu'un ressort 25a. Ce ressort 25a est par exemple entourée par la partie d'ancrage 15b qui inclut aussi des ouvertures latérales 51. L'élément de rappel élastique peut reposer, par une partie fixe, sur un bord où épaulement interne prévu dans la partie d'ancrage 15b. La partie mobile de cet élément de rappel est couplée au/solidaire du support formant le bouchon 25. Cette disposition peut permettre une expansion du volume V5 au fur et à mesure que de l'eau est absorbée.

En référence aux Figures 1, 3 et 5, on peut voir que la cartouche 1 peut présenter un ou plusieurs moyens de dérivation pour faire circuler une deuxième fraction de liquide dans l'espace interne creux 9 en direction du ou des orifices qui permettent de former la deuxième région de sortie 12. Deux moyens distincts de dérivation peuvent être utilisés, permettant, pour l'un de faire circuler un flux de la zone d'amont V1 à l'espace interne 9 sans passer par le média 2, et pour l'autre de faire circuler un flux de l'espace interne 9 à la zone d'aval située en dehors de la cartouche (au niveau du conduit CS) sans passer par le volume interne V5 du filtre 5 (en particulier sans traverser la paroi perméable T du filtre 5).

### Exemple d'intégration d'une vanne à l'opposé du deuxième élément filtrant

Le premier élément filtrant EF est éventuellement adapté pour inclure une vanne 10 incluant un clapet anti-retour 1c monté dans l'espace interne creux 9, au travers de l'ouverture axiale O1 formée à l'opposé du flasque 1a, cette ouverture étant ici formée centralement dans un flasque 1b qui se monte directement sur l'ossature 1c. L'ouverture axiale O1 définit un accès à l'espace interne creux 9, à l'opposé de l'orifice axial 30. La vanne 10 présente un corps 10a qui peut présenter une extrémité de fixation avec ancrage sur l'ossature 1c, par exemple par clipsage ou emboîtement élastique similaire.

Le corps 10a, tubulaire ou cylindrique peut être entourée par une zone de circulation de liquide purifié par le média 2, en s'insérant dans l'espace 9. En revanche, le conduit/canal intérieur délimité par ce corps 10a peut permettre une circulation axiale de liquide brut en direction de la zone d'aval, lorsque le débouché à l'extrémité du corps 10a n'est pas obturée par la partie d'obturation, ici transversale, du clapet 10c. Il est permis de réaliser un accès (O1, 10a) direct, en cas de surpression en aval de la filtration, pour permettre à du liquide de contourner le média filtrant 2. Le corps 10a peut être réalisé en une seule pièce, en incluant l'organe de fixation 10b, ici se composant d'un disque à bord de prise pour permette une attache par des crochets 3b prévus intérieurement dans le couvercle 3a, ce disque étant relié à une partie formant un sur-flasque annulaire dont l'ouverture centrale correspond à l'accès au conduit pour le liquide délimité par le reste du corps 10a.

Comme montré sur la figure 3, le clapet 10c du type anti-retour est mobile axialement dans l'espace interne creux 9, parallèlement à l'axe central Z, en étant sollicité contre le siège annulaire formé par l'extrémité du corps 10a (extrémité distale du couvercle 3a) en direction opposée au deuxième élément filtrant, par un élément de rappel 10d tel qu'un ressort ou organe similaire. L'organe de rappel 10d (montré assemblé ici à la partie d'obturation du clapet 10c mais monté typiquement par le dessous/extrémité du corps proximale du couvercle, avant de fixer la partie d'obturation) est en appui axial contre des entretoises ou partie de retenue similaire formée dans l'extrémité du corps 10 qui est distale du couvercle 3a.

Le recours à un élément de rappel élastique, par exemple sous la forme d'un organe déformable tel qu'un ressort, optionnellement un ressort hélicoïdal, assure un fonctionnement robuste de la vanne 10 dans une conception préassemblée et compacte. Pour cela, le clapet 10c peut présenter une tige axiale dont l'extrémité 10e peut inclure une encoche ou un relief de fixation d'une extrémité de l'élément de rappel 10d. Une autre extrémité de l'élément de rappel 10d peut être rendue fixe dans l'élément filtrant EF en étant maintenue accolée contre la partie/entretoise de retenue prévue dans le corps 10a, par exemple au plus près du débouché de l'ouverture de la vanne 10. Ici, la pression en zone d'aval V1, lorsqu'elle dépasse un seuil permettant la compression du ressort ou déplacement de partie mobile analogue du composant formant l'élément de rappel 10d, peut permettre le déplacement axial du clapet 10c en s'éloignant de l'organe 10b de fixation au couvercle 3a.

Un des avantages de la cartouche 1 est qu'elle présente une facilité de manipulation, lors de son montage ou lors d'opérations de rechange, et intègre un élément pouvant combiner des avantages de séparation d'eau se trouvant dans du lubrifiant.

La présente divulgation ne se limite pas aux modes de réalisation décrits ci-avant, seulement à titre d'exemple, mais elle englobe toutes les variantes que pourra envisager l'homme de l'art dans le cadre de la protection recherchée.

Par exemple, bien que les dessins illustrent le cas d'un tube ajouré 6 à section annulaire arrondie pour le filtre 5, d'autres géométries sont possibles, par exemple avec une section rectangulaire, polygonale, éventuellement carrée, ovale ou bilobée/multilobée, avec une partition longitudinale entre deux sous-volumes (dont l'un est éventuellement accessible par un clapet de dérivation), disposant chacun d'un matériau de dessication.

La mise en place du filtre 5 par l'orifice axiale 30 a été décrite dans des options permettant de délimiter des accès périphériques pour du liquide (section périphérique continue ou discontinue, formée autour de la paroi perméable T). Cependant, la section de passage auxiliaire pour du liquide non traité par le matériau de dessiccation peut être formée de façon différente, par exemple en localisant le filtre 5 seulement dans un secteur angulaire particulier, éventuellement avec un décentrage par rapport à l'axe Z du média 2.

## Revendications

1. Cartouche filtrante (1) pour la filtration d'un liquide de moteur, la cartouche filtrante comprenant :
- un premier élément filtrant (EF) incluant un média filtrant (2) de forme annulaire permettant une purification dudit liquide en s'étendant autour d'un axe central (Z), un espace interne creux (9) délimité par le média filtrant (2) débouchant axialement via au moins un orifice axial (30) prévu dans le premier élément filtrant (EF) ; et
- un filtre de dessiccation (5) ayant une paroi perméable (T) entourant un volume interne (V5) dans lequel est reçu du matériau de dessiccation (M, M'), le filtre (5) présentant une extrémité libre formant tout ou partie d'une région de sortie (11) de liquide purifié mis en contact avec le matériau de dessiccation ;
**caractérisée en ce que** le filtre de dessiccation (5) est une unité préassemblée, distincte du premier élément filtrant (EF) pour constituer un deuxième élément filtrant pourvu d'un connecteur (7) engagé sur une ossature (1c) du premier élément filtrant (EF) à l'opposé de l'extrémité libre, en étant inséré axialement dans ledit espace (9) via l'orifice axial (30), de sorte que le connecteur (7) s'étend dans l'espace interne creux (9) où circule du liquide purifié sortant d'une face interne (2b) du média filtrant (2), l'orifice axial (30) incluant au moins une section de passage, de préférence périphérique par rapport à la paroi perméable (T), permettant à du liquide présent dans l'espace interne creux (9) de circuler hors de la cartouche filtrante (1) via ledit orifice axial (30) sans passer par la paroi perméable (T), de sorte à former une autre région de sortie (12) pour faire sortir du liquide hors de la cartouche filtrante (1).

2. Cartouche filtrante selon la revendication 1, dans laquelle la paroi perméable (T) présente une portion latérale tubulaire agencée longitudinalement et parallèlement au média filtrant (2), pour permettre de réaliser successivement une première filtration centripète par le média filtrant (2) et une deuxième filtration centripète par la portion latérale tubulaire, pour une première fraction de liquide avant une mise en contact de cette première fraction de liquide avec le matériau de dessiccation (M, M'),
la cartouche filtrante (1) comprenant des moyens de dérivation pour faire circuler une deuxième fraction de liquide dans l'espace interne creux (9) en direction dudit orifice axial (30) sans passer par l'un au moins parmi le média filtrant (2) et la paroi perméable (T).

3. Cartouche filtrante selon la revendication 1 ou 2, dans laquelle l'ossature (1c) du premier élément filtrant (EF) et une paroi latérale externe du deuxième élément filtrant, incluant la paroi perméable (T), sont en regard l'une de l'autre dans l'espace interne creux avec un espacement radial, de préférence supérieur ou égale à 1 mm, et/ou en chevauchement l'une sur l'autre de façon à délimiter des canaux intercalaires longitudinaux pour la circulation du liquide jusqu'à l'orifice axial (30).

4. Cartouche filtrante selon la revendication 1, 2 ou 3, dans laquelle le deuxième élément filtrant présente deux extrémités axiales (E1, E2) opposées l'une à l'autre suivant la direction de l'axe central (Z), la paroi perméable (T) ayant ou consistant en une une portion latérale tubulaire s'étendant de façon annulaire autour de l'axe central (Z),
et dans laquelle le matériau de dessiccation (M, M') forme une couche filtrante, distincte de la paroi perméable (T) et traversée par l'axe central (Z).

5. Cartouche filtrante selon la revendication 4 lorsqu'elle dépend de la revendication 3, dans laquelle le premier élément filtrant (EF) inclut en outre un flasque (1a) ayant une portion radiale pourvue dudit orifice axial (30) et recouvrant une extrémité axiale du média filtrant (2), dans laquelle les deux extrémités axiales (E1, E2) comportent une première extrémité axiale (E1) incluant une partie d'ancrage (15b) qui est pourvue d'au moins un rebord de prise (B) formant une butée qui coopère avec une portion annulaire rigide de l'ossature (1c), dans l'espace interne creux (9), pour s'opposer à une extraction axiale du deuxième élément filtrant suivant une première direction axiale,
et dans laquelle les deux extrémités axiales (E1, E2) comportent une deuxième extrémité axiale (E2) qui :
- s'étend en saillie axialement par rapport au flasque (1a) suivant la première direction axiale, à l'extérieur de l'espace interne creux (9) ; et
- présente des moyens d'appui pour permettre un appui axial sur le flasque (1a) ou sur l'ossature (1c), en sens opposé à la première direction et par l'extérieur du premier élément filtrant (EF) ;
ce grâce à quoi que le connecteur (7) permet une fixation indémontable du deuxième élément filtrant dans le premier élément filtrant (EF).

6. Cartouche filtrante selon l'une quelconque des revendications précédentes, dans laquelle le connecteur (7) est fixé au flasque (1a) ou à l'ossature (1c), dans une position axiale déterminée, par utilisation d'une ou plusieurs parties de contact, qui sont distribuées latéralement sur le connecteur (7), en alternance avec des encoches ou zones évidées permettant un passage de liquide entre le flasque (1a) et une portion latérale tubulaire de la paroi perméable (T).

7. Cartouche filtrante selon l'une quelconque des revendications précédentes, dans laquelle le premier élément filtrant (EF) est pourvu d'une vanne (10) incluant un clapet anti-retour (1c) monté dans l'espace interne creux (9) au travers d'une ouverture axiale (O1) formant un accès à l'espace interne creux (9), à l'opposé dudit orifice axial (30).

8. Cartouche filtrante selon la revendication 2 et la revendication 7, dans laquelle les moyens de dérivation présentent :
- un premier accès (O1, 10a) pour permettre à du liquide de contourner le média filtrant (2) pour accéder à l'espace interne creux (9), le premier accès correspondant à un conduit du clapet anti-retour (10) ; et
- un deuxième accès (52), longeant de préférence longitudinalement l'extérieur de la paroi perméable (T), pour permettre à du liquide déjà présent dans l'espace interne creux (9) de contourner la paroi perméable (T), le deuxième accès (52) correspondant à une zone, de préférence annulaire, d'espacement radial entre :
- un tube ajouré (19) du deuxième élément filtrant qui traverse l'orifice axial (30) ;
- et un élément tubulaire ajouré comparativement plus large qui constitue tout ou partie de l'ossature (1c) du premier élément filtrant (EF) ;
le tube ajouré (19) étant porteur d'une membrane constitutive de la paroi perméable (T), en entourant cette membrane qui est de préférence fixée par surmoulage.

9. Cartouche filtrante selon l'une quelconque des revendications précédentes, dans laquelle le matériau de dessication (M, M') contient l'un au moins parmi un gel déshydratant incluant de la silice, de l'argile, de la bentonite et/ou une structure à zéolithes, au moins un polymère de type hydrogel (super absorbant),
et dans laquelle la paroi perméable (T) présente une taille maximale de maille inférieure ou égale à 300 micromètres, de préférence de l'ordre de 150 micromètres.

10. Cartouche filtrante selon l'une quelconque des revendications précédentes, dans laquelle le volume interne (V5) est expansible par utilisation d'un bouchon (25) mobile suivant la direction de l'axe central (Z) et disposé dans l'espace interne creux (9), le bouchon (25) étant de préférence contraint par un élément de rappel élastique porté par le deuxième élément filtrant.

11. Dispositif de filtration (F) pour la purification d'un liquide de moteur, en particulier d'huile, le dispositif comprenant :
- un boîtier (3) de filtre qui présente une base ou support (S) pourvu d'une entrée pour liquide brut et une sortie (O) pour liquide purifié, le boîtier (3) définissant un volume intérieur et présentant un fond avec un conduit tubulaire (CS) formant une sortie (O) ;
- un couvercle (3a) pour empêcher l'accès au volume intérieur et se fixant de manière amovible sur une paroi latérale (4a) annulaire du support (S) ; et
- la cartouche filtrante (1) selon l'une quelconque des revendications précédentes, logée de façon amovible dans le volume intérieur du boîtier (3) avec le conduit tubulaire (CS) en alignement avec l'espace interne creux (9) ;
dans lequel le couvercle (3a) est apte à venir prise avec un organe de fixation (10b) prévu sur la cartouche (1) axialement à l'opposé des deux régions de sortie (11, 12), le premier élément filtrant (EF) et le deuxième élément filtrant étant assemblés de façon inséparable et/ou sans former de bord de retenue axiale par le support (S) s'opposant à un retrait de la cartouche, ce qui permet à la cartouche (1) d'être extraite d'un bloc avec le couvercle (3a) lorsque ce dernier est séparé du support (S).

12. Dispositif de filtration selon la revendication 11, dans lequel le deuxième élément filtrant constituant le filtre de dessiccation (5) est inséré :
- de façon amovible dans le conduit tubulaire (CS) avec une zone d'écoulement laissée libre entre la paroi perméable (T) et une face intérieure du conduit tubulaire (CS) ; et
- de préférence de façon indémontable, dans l'espace interne creux (9) ;
et dans lequel le connecteur (7) présente au moins deux pattes radiales en saillie pour limiter l'insertion du deuxième élément filtrant dans l'espace interne creux (9), le matériau de dessication (M, M') étant entouré par une portion tubulaire de la paroi perméable (T) qui s'étend longitudinalement autour d'un axe central (X) du conduit tubulaire (CS).

13. Dispositif de filtration selon la revendication 11 ou 12, comprenant une vanne (10) à clapet anti-retour (10c) pourvue d'un corps (10a) monté solidaire d'un flasque (1b) du premier élément filtrant (EF) qui est axialement à l'opposé du flasque (1a) pourvu de l'orifice axial (30), la vanne (10) permettant de contourner le média filtrant (2) en réponse à une pression de liquide brut amené par l'entrée s'exerçant axialement sur le clapet (10c) en direction du deuxième élément filtrant,
et dans lequel le premier élément filtrant (EF) est connecté au couvercle (3a) de façon amovible par l'organe de fixation (10b), qui est de préférence réalisé d'une seule pièce en formant ledit corps (10a) de la vanne (10).

14. Utilisation de la cartouche filtrante (1) selon l'une quelconque des revendications 1 à 10 dans un boîtier (3) pour permettre une filtration de liquide de lubrification, **caractérisée en ce que** le deuxième élément filtrant est :
- d'abord inséré dans l'espace interne creux (9) par l'orifice axial (30) du premier élément filtrant (EF),
- puis rendu solidaire d'un couvercle (3a) d'un boîtier (3) par l'intermédiaire d'un organe de fixation (10b) monté fixe dans le premier élément de filtrant (EF) à l'opposé de l'orifice axial (30), le premier élément filtrant (EF) supportant le deuxième élément filtrant lors d'une rotation du couvercle (3a) exercée pour ouvrir et respectivement fermer le boîtier (3),
sachant que le deuxième élément filtrant est obtenu en tant qu'unité préassemblée avec la paroi perméable (T) qui permet de séparer le connecteur (7) réalisé en tant que tube ajouré, du volume interne (V5) où le liquide de lubrification est mis au contact du matériau de dessiccation (M, M').

## Patentansprüche

1. Filterpatrone (1) zum Filtern einer Motorflüssigkeit, wobei die Filterpatrone umfasst:
- ein erstes Filterelement (EF), welches ein Filtermedium (2) in einer Ringform umfasst, welches eine Reinigung der Flüssigkeit ermöglicht, indem es sich um eine zentrale Achse (Z) erstreckt, wobei sich ein hohler Innenraum (9), welcher durch das Filtermedium (2) begrenzt ist, axial mittels wenigstens einer axialen Öffnung (30) öffnet, welche in dem ersten Filterelement (EF) vorgesehen ist; und
- einen Trocknungsfilter (5), welcher eine permeable Wand (T) aufweist, welche ein Innenvolumen (V5) einschließt, in welchem Trocknungsmaterial (M, M') aufgenommen ist, wobei der Filter (5) ein freies Ende aufweist, welches alles oder einen Teil eines Ausgangsbereichs (11) für gereinigte Flüssigkeit bildet, welche in Kontakt mit dem Trocknungsmaterial gebracht wird;
**dadurch gekennzeichnet, dass** der Trocknungsfilter (5) eine vormontierte Einheit ist, welche verschieden von dem ersten Filterelement (EF) ist, um ein zweites Filterelement zu bilden, welches mit einem Verbindungselement (7) versehen ist, welches an einem Gerippe (1c) des ersten Filterelements (EF) gegenüber dem freien Ende angebracht ist, indem es axial in den Raum (9) mittels der axialen Öffnung (30) eingesetzt ist, so dass sich das Verbindungselement (7) in dem hohlen Innenraum (9) erstreckt, wo gereinigte Flüssigkeit zirkuliert, welche aus einer Innenfläche (2b) des Filtermediums (2) austritt, wobei die axiale Öffnung (30) wenigstens einen Durchgangsabschnitt umfasst, vorzugsweise umfänglich bezüglich der permeablen Wand (T), wodurch Flüssigkeit, welche in dem hohlen Innenraum (9) vorliegt, erlaubt wird, aus der Filterpatrone (1) mittels der axialen Öffnung (30) auszutreten, ohne dass die permeable Wand (T) passiert wird, so dass ein weiterer Austrittsbereich (12) gebildet wird, um Flüssigkeit dazu zu bringen, aus der Filterpatrone (1) auszutreten.

2. Filterpatrone nach Anspruch 1, wobei die permeable Wand (T) einen rohrförmigen lateralen Abschnitt aufweist, welcher longitudinal und parallel zu dem Filtermedium (2) angeordnet ist, um aufeinander folgend ein erstes zentripetales Filtern durch das Filtermedium (2) und ein zweites zentripetales Filtern durch den rohrförmigen lateralen Abschnitt zu ermöglichen, für einen ersten Teil der Flüssigkeit vor einem in-Kontakt-Bringen dieses ersten Teils der Flüssigkeit mit dem Trocknungsmaterial (M, M'),
wobei die Filterpatrone (1) Ableitungsmittel umfassen, um einen zweiten Teil der Flüssigkeit dazu zu bringen, in dem hohlen Innenraum (9) in Richtung der axialen Öffnung (30) zu zirkulieren, ohne durch eines von wenigstens dem Filtermedium (2) und der permeablen Wand (T) hindurchzutreten.

3. Filterpatrone nach Anspruch 1 oder 2, wobei das Gerippe (1c) des ersten Filterelements (EF) und eine externe laterale Wand des zweiten Filterelements, welche die permeable Wand (T) umfasst, einander in dem hohlen Innenraum mit einem radialen Abstand gegenüberliegen, welcher vorzugsweise größer oder gleich 1 mm ist, und/oder in Überlappung des einen auf dem anderen derart, dass longitudinale Zwischenkanäle für die Zirkulation der Flüssigkeit bis zu der axialen Öffnung (30) begrenzt werden.

4. Filterpatrone nach Anspruch 1, 2 oder 3, wobei das zweite Filterelement zwei einander der Richtung der zentralen Achse (Z) folgend gegenüberliegende axiale Enden (E1, E2) aufweist, wobei die permeable Wand (T) einen rohrförmigen lateralen Abschnitt aufweist oder daraus besteht, welcher sich in ringförmiger Weise um die zentrale Achse (Z) herum erstreckt,
und wobei das Trocknungsmaterial (M, M') eine Filterschicht bildet, welche von der permeablen Wand (T) verschieden ist und von der zentralen Achse (Z) durchquert wird.

5. Filterpatrone nach Anspruch 4, wenn dieser von Anspruch 3 abhängt, wobei das erste Filterelement (EF) ferner einen Flansch (1a) umfasst, welcher einen radialen Abschnitt aufweist, welcher mit der axialen Öffnung (30) versehen ist und ein axiales Ende des Filtermediums (2) bedeckt, wobei die beiden axialen Enden (E1, E2) ein erstes axiales Ende (E1) umfassen, welches einen Verankerungsteil (15b) umfasst, welcher mit wenigstens einem Greifrand (B) versehen ist, welcher einen Anschlag bildet, welcher mit einem steifen ringförmigen Abschnitt des Gerippes (1c) zusammenwirkt, in dem hohlen Innenraum (9), um einer axialen Entnahme des zweiten Filterelements einer ersten axialen Richtung folgend entgegenzuwirken, und wobei die beiden axialen Enden (E1, E2) ein zweites axiales Ende (E2) umfassen, welches:
- sich axial bezüglich des Flanschs (1a) der ersten axialen Richtung folgend vorstehend an der Außenseite des hohlen Innenraums (9) erstreckt; und
- Auflagemittel aufweist, um eine axiale Auflage an dem Flansch (1a) oder an dem Gerippe (1c) in entgegengesetztem Sinn zu der ersten Richtung und von der Außenseite des ersten Filterelements (EF) zu ermöglichen;
dank welcher das Verbindungselement (7) ein unlösbares Befestigen des zweiten Filterelements in dem ersten Filterelement (EF) erlaubt.

6. Filterpatrone nach einem der vorhergehenden Ansprüche, wobei das Verbindungselement (7) an dem Flansch (1a) oder an dem Gerippe (1c) in einer vorbestimmten axialen Position befestigt ist, durch Verwendung von einem oder mehreren Kontaktabschnitten, welche lateral an dem Verbindungselement (7) abwechselnd mit Kerben oder ausgenommenen Zonen verteilt sind, was einen Durchgang der Flüssigkeit zwischen dem Flansch (1a) und einem rohrförmigen lateralen Abschnitt der permeablen Wand (T) ermöglicht.

7. Filterpatrone nach einem der vorhergehenden Ansprüche, wobei das erste Filterelement (EF) mit einem Ventil (10) versehen ist, welches ein Rückschlagventil (1c) umfasst, welches in dem hohlen Innenraum (9) durch eine axiale Öffnung (O1) montiert ist, welche einen Zugang zu dem hohlen Innenraum (9) bildet, gegenüber der axialen Öffnung (30).

8. Filterpatrone nach Anspruch 2 und Anspruch 7, wobei die Ableitungsmittel aufweisen:
- einen ersten Zugang (O1, 10a), um Flüssigkeit zu erlauben, das Filtermedium (2) zu umgehen, um in den hohlen Innenraum (9) zu gelangen, wobei der erste Zugang einer Leitung des Rückschlagventils (10) entspricht; und
- einen zweiten Zugang (53), welcher sich vorzugsweise longitudinal an der Außenseite der permeablen Wand (T) erstreckt, um es der bereits in dem hohlen Innenraum (9) vorliegenden Flüssigkeit zu erlauben, die permeable Wand (T) zu umgehen, wobei der zweite Zugang (52) einer vorzugsweise ringförmigen radialen Abstandszone entspricht zwischen:
- einem durchbrochenen Rohr (19) des zweiten Filterelements, welches die axiale Öffnung (30) durchquert;
- und einem durchbrochenen rohrförmigen Element, welches vergleichsweise größer ist, welches alles oder einen Teil des Gerippes (1c) des ersten Filterelements (EF) bildet;
wobei das durchbrochene Rohr (19) ein Träger einer Membran ist, welche die permeable Wand (T) bildet, indem diese Membran umgeben wird, welche vorzugsweise durch Überformen befestigt ist.

9. Filterpatrone nach einem der vorhergehenden Ansprüche, wobei das Trocknungsmaterial (M, M') wenigstens eines enthält aus einem Trocknungsmittelgel, welches Kieselsäure, Ton, Bentonit und/oder eine Zeolithstruktur umfasst, wenigstens einem Polymer vom Hydrogel-Typ (Superabsorber),
und wobei die permeable Wand (T) eine maximale Maschengröße kleiner oder gleich 300 Mikrometer aufweist, vorzugsweise in der Größenordnung von 150 Mikrometer.

10. Filterpatrone nach einem der vorhergehenden Ansprüche, wobei das Innenvolumen (V5) durch Verwendung eines Stopfens (25) erweiterbar ist, welcher der Richtung der zentralen Achse (Z) folgend bewegbar ist und in dem hohlen Innenraum (9) angeordnet ist, wobei der Stopfen (25) vorzugsweise durch ein elastisches Rückstellelement gehalten ist, welches von dem zweiten Filterelement getragen ist.

11. Filtervorrichtung (F) zum Reinigen einer Motorflüssigkeit, insbesondere von Öl, die Vorrichtung umfassend:
- ein Filtergehäuse (3), welches eine Basis oder einen Träger (S) aufweist, welcher mit einem Eingang für Rohflüssigkeit und einem Ausgang (O) für gereinigte Flüssigkeit versehen ist, wobei das Gehäuse (3) ein Innenvolumen definiert und einen Boden mit einer rohrförmigen Leitung (CS) aufweist, welche einen Ausgang (O) bildet;
- eine Abdeckung (3a) zum Versperren des Zugangs zu dem Innenvolumen und welche in lösbarer Weise an einer ringförmigen lateralen Wand (4a) des Trägers (S) befestigt ist; und
- eine Filterpatrone (1) nach einem der vorhergehenden Ansprüche, welche in lösbarer Weise in dem Innenvolumen des Gehäuses (3) mit der rohrförmigen Leitung (CS) in Ausrichtung mit dem hohlen Innenraum (9) sitzt;
wobei die Abdeckung (3a) dazu geeignet ist, in Eingriff mit einem Befestigungsmittel (10b) zu kommen, welches axial an der Patrone (1) gegenüber den beiden Ausgangsbereichen (11, 12) vorgesehen ist, wobei das erste Filterelement (EF) und das zweite Filterelement in unlösbarer Weise montiert sind und/oder ohne dass ein axialer Halterand durch den Träger (S) gebildet ist, welcher einer Entnahme der Patrone entgegenwirkt, was es der Patrone (1) erlaubt, in einem Stück mit der Abdeckung (3a) entnommen zu werden, wenn letztere von dem Träger (S) getrennt ist.

12. Filtervorrichtung nach Anspruch 11, wobei das zweite Filterelement, welches den Trocknungsfilter (5) bildet, eingesetzt ist:
- in lösbarer Weise in der rohrförmigen Leitung (CS) mit einer Strömungszone, welche zwischen der permeablen Wand (T) und einer Innenfläche der rohrförmigen Leitung (CS) freigelassen ist; und
- vorzugsweise in unlösbarer Weise in dem hohlen Innenraum (9);
und wobei das Verbindungselement (7) wenigstens zwei vorstehende radiale Laschen aufweist, um das Einsetzen des zweiten Filterelements in dem hohlen Innenraum (9) zu begrenzen, wobei das Trocknungsmaterial (M, M') durch einen rohrförmigen Abschnitt der permeablen Wand (T) umgeben ist, welcher sich longitudinal um eine zentrale Achse (X) der rohrförmigen Leitung (CS) herum erstreckt.

13. Filtervorrichtung nach Anspruch 11 oder 12, umfassend ein Ventil (10) mit einem Rückschlagventil (10c), welches mit einem Körper (10a) versehen ist, welcher verbunden mit einem Flansch (1b) des ersten Filterelements (EF) montiert ist, welcher axial gegenüber des Flanschs (1a) liegt, welcher mit der axialen Öffnung (30) versehen ist, wobei das Ventil (10) ein Umgehen des Filtermediums (2) in Reaktion darauf ermöglicht, dass ein Rohflüssigkeitsdruck, welcher durch den Eingang angelegt wird, axial auf das Ventil (10c) in Richtung des zweiten Filterelements ausgeübt wird,
und wobei das erste Filterelement (EF) mit der Abdeckung (3a) in lösbarer Weise durch das Befestigungsmittel (10b) verbunden ist, welches vorzugsweise einstückig gebildet ist, indem es den Körper (10a) des Ventils (10) bildet.

14. Verwendung der Filterpatrone (1) nach einem der Ansprüche 1 bis 10 in einem Gehäuse (3), um ein Filtern einer Schmierflüssigkeit zu ermöglichen, **dadurch gekennzeichnet, dass** das zweite Filterelement:
- zuerst in den hohlen Innenraum (9) durch die axiale Öffnung (30) des ersten Filterelements (EF) eingeführt wird;
- und dann mit einer Abdeckung (3a) eines Gehäuses (3) mittels eines Befestigungselements (10b) verbunden wird, welches fest in dem ersten Filterelement (EF) gegenüber der axialen Öffnung (30) montiert ist, wobei das erste Filterelement (EF) das zweite Filterelement während einer Rotation der Abdeckung (3a) trägt, welche ausgeübt wird, um das Gehäuse (3) zu öffnen bzw. zu schließen,
wobei das zweite Filterelement als eine vormontierte Einheit mit der permeablen Wand (T) erhalten wird, welche es ermöglicht, das Verbindungselement (7), welches als durchbrochenes Rohr gebildet ist, von dem Innenvolumen (V5) zu trennen, wo die Schmierflüssigkeit in Kontakt mit dem Trocknungsmaterial (M, M') gebracht wird.

## Claims

1. A filter cartridge (1) for filtering an engine fluid, the filter cartridge comprising:
- a first filter element (EF) including an annular filtration medium (2) allowing purification of said fluid by extending around a central axis (Z), a hollow internal space (9) delimited by the filtration medium (2) opening axially via at least one axial orifice (30) provided in the first filter element (EF); and
- a desiccation filter (5) having a permeable wall (T) surrounding an inner volume (V5) in which desiccation material (M, M') is received, the filter (5) having a free end forming all or part of an outlet region (11) for purified fluid put in contact with the desiccation material;
**characterised in that** the desiccation filter (5) is a pre-assembled unit, separate from the first filter element (EF) to constitute a second filter element provided with a connector (7) engaged on a frame (1c) of the first filter element (EF) opposite the free end, by being axially inserted into said space (9) via the axial orifice (30), such that the connector (7) extends into the hollow internal space (9) where purified fluid flows out of an internal face (2b) the filtration medium (2), the axial orifice (30) including at least one flow area, preferably peripheral with respect to the permeable wall (T), allowing the fluid present in the hollow internal space (9) to flow out of the filter cartridge (1) via said axial orifice (30) without passing through the permeable wall (T), so as to form another outlet region (12) for driving the fluid out of the filter cartridge (1).

2. Filter cartridge according to claim 1, wherein the permeable wall (T) has a tubular side portion arranged longitudinally and parallel to the filtration medium (2), to make it possible to successively perform a first centrifugal filtration via the filtration medium (2) and a second centrifugal filtration via the tubular side portion, for a first fluid fraction before putting this first fluid fraction in contact with the desiccation material (M, M'),
the filter cartridge (1) comprising bypass means for circulating a second fluid fraction in the hollow internal space (9) towards said axial orifice (30) without passing through at least one of the filtration medium (2) and the permeable wall (T).

3. Filter cartridge according to claim 1 or 2, wherein the frame (1c) of the first filter element (EF) and an outer side wall of the second filter element, including the permeable wall (T), are facing one another in the hollow internal space with a radial spacing, preferably greater than or equal to 1 mm, and/or overlapping one another so as to delimit longitudinal separator channels for the circulation of the fluid up to the axial orifice (30).

4. Filter cartridge according to claim 1, 2 or 3, wherein the second filter element has two axial ends (E1, E2) opposite one another along the direction of the central axis (Z), the permeable wall (T) having or consisting of a tubular side portion extending annularly about the central axis (Z),
and wherein the desiccation material (M, M') forms a filtration layer, separate from the permeable wall (T) and crossed by the central axis (Z).

5. Filter cartridge according to claim 4 when it depends on claim 3, wherein the first filter element (EF) further includes a flange (1a) having a radial portion provided with said axial orifice (30) and covering an axial end of the filtration medium (2), wherein the two axial ends (E1, E2) include a first axial end (E1) including an anchoring portion (15b) which is provided with at least one gripping edge (B) forming a stop that cooperates with a rigid annular portion of the frame (1c), in the hollow internal space (9), to prevent an axial extraction of the second filter element along a first axial direction,
and wherein the two axial ends (E1, E2) include a second axial end (E2) that:
- extends by protruding axially with respect to the flange (1a) along the first axial direction, outside the hollow internal space (9); and
- has bearing means to allow axial bearing on the flange (1a) or on the frame (1c), in the direction opposite to the first direction and via the outside of the first filter element (EF);
whereby the connector (7) allows a non-removable attachment of the second filter element in the first filter element (EF).

6. Filter cartridge according to any one of the preceding claims, wherein the connector (7) is attached to the flange (1a) or the frame (1c), in a determined axial position, by using one or more contact portions, which are distributed laterally on the connector (7), alternating with notches or recessed areas allowing a passage of fluid between the flange (1a) and a tubular side portion of the permeable wall (T).

7. Filter cartridge according to any one of the preceding claims, wherein the first filter element (EF) is provided with a valve (10) including a check valve (1c) mounted in the hollow internal space (9) through an axial opening (O1) forming an access to the hollow internal space (9), opposite said axial orifice (30).

8. Filter cartridge according to claim 2 and claim 7, wherein the bypass means have:
- a first access (O1, 10a) to allow the fluid to bypass the filtration medium (2) in order to access the hollow internal space (9), the first access corresponding to a conduit of the check valve (10); and
- a second access (52), preferably longitudinally along the outside of the permeable wall (T), to allow the fluid already present in the hollow internal space (9) to bypass the permeable wall (T), the second access (52) corresponding to an area, preferably annular, of radial spacing between:
- a perforated tube (19) of the second filter element that passes through the axial orifice (30);
- and a comparatively wider perforated tubular element that constitutes all or part of the frame (1c) of the first filter element (EF);
the perforated tube (19) carrying a membrane constituting the permeable wall (T), by surrounding this membrane which is preferably fixed by overmoulding.

9. Filter cartridge according to any one of the preceding claims, wherein the desiccation material (M, M') contains at least one of a desiccation gel including silica, clay, bentonite, and/or a zeolite structure, at least one hydrogel (super absorbent) polymer,
and wherein the permeable wall (T) has a maximum mesh size less than or equal to 300 micrometres, preferably in the order of 150 micrometres.

10. Filter cartridge according to any one of the preceding claims, wherein the internal volume (V5) is expandable by using a cap (25) movable along the direction of the central axis (Z) and disposed in the hollow internal space (9), the cap (25) preferably being constrained by an elastic return element carried by the second filter element.

11. Filtration device (F) for purifying an engine fluid, in particular oil, the device comprising:
- a filter housing (3) which has a base or support (S) provided with an inlet for unpurified fluid and an outlet (O) for purified fluid, the housing (3) defining an inner volume and having a bottom with a tubular conduit (CS) forming an outlet (O);
- a cover (3a) for preventing access to the inner volume and removably attaching to an annular side wall (4a) of the support (S); and
- the filter cartridge (1) according to any one of the preceding claims, removably housed in the inner volume of the housing (3) with the tubular conduit (CS) in alignment with the hollow internal space (9);
wherein the cover (3a) is capable of being gripped with a fastening member (10b) provided on the cartridge (1) axially opposite the two outlet regions (11, 12), the first filter element (EF) and the second filter element being assembled inseparably and/or without forming an axial retaining edge by the support (S) preventing a withdrawal of the cartridge, which allows the cartridge (1) to be extracted in one piece with the cover (3a) when the latter is separated from the support (S).

12. Filtration device according to claim 11, wherein the second filter element constituting the desiccation filter (5) is inserted:
- removably in the tubular conduit (CS) with a free flow zone left between the permeable wall (T) and an inner face of the tubular conduit (CS); and
- preferably non-removably, in the hollow internal space (9);
and wherein the connector (7) has at least two protruding radial tabs to limit the insertion of the second filter element into the hollow internal space (9), the desiccation material (M, M') being surrounded by a tubular portion of the permeable wall (T) that extends longitudinally about a central axis (X) of the tubular duct (CS).

13. Filtration device according to claim 11 or 12, comprising a valve (10) with a check valve (10c) provided with a body (10a) mounted integrally with a flange (1b) of the first filter element (EF) which is axially opposite the flange (1a) provided with the axial orifice (30), the valve (10) making it possible to bypass the filtering medium (2) in response to a pressure of unpurified fluid brought by the inlet exerting axially on the valve (10c) in the direction of the second filter element,
and wherein the first filter element (EF) is removably connected to the cover (3a) by the fastening member (10b), which is preferably made of a single piece by forming said body (10a) of the valve (10).

14. Use of the filter cartridge (1) according to any one of claims 1 to 10 in a housing (3) to enable filtration of lubricating fluid, **characterised in that** the second filter element is:
- first inserted into the hollow internal space (9) through the axial orifice (30) of the first filter element (EF),
- then made integral with a cover (3a) of a housing (3) by means of a fastening member (10b) mounted fixed in the first filter element (EF) opposite the axial orifice (30), the first filter element (EF) supporting the second filter element during a rotation of the cover (3a) carried out to open and respectively close the housing (3),
wherein the second filter element is obtained as a pre-assembled unit with the permeable wall (T) which makes it possible to separate the connector (7) made as a perforated tube, from the internal volume (V5) where the lubricating fluid is brought into contact with the desiccation material (M, M').
